# EUROPÄISCHE PATENTSCHRIFT

(11) **EP 1 697 390 B1**
(45) Veröffentlichungstag und Bekanntmachung des Hinweises auf die Patenterteilung: **28.11.2007**
(21) Anmeldenummer: 04820837.5
(22) Anmeldetag: 27.10.2004
(51) Int. Cl.: C07F 9/6571, C07F 9/6574

(54) **VERFAHREN ZUR HERSTELLUNG VON ORGANOACYLPHOSPHITEN**
METHOD FOR PRODUCING ORGANOACYLPHOSPHITES
PROCEDE DE FABRICATION D'ORGANOACYLPHOSPHITES

(30) Priorität: 23.12.2003 DE 10360772
(43) Veröffentlichungstag der Anmeldung: 06.09.2006
(73) Patentinhaber: Oxeno Olefinchemie GmbH, 45772 Marl (DE)
(72) Erfinder: ORTMANN, Dagmara, CH-3902 Brig (CH); WIESE, Klaus-Diether, 45721 Haltern am See (DE); MÖLLER, Oliver, 45665 Recklinghausen (DE); FRIDAG, Dirk, 45721 Haltern am See (DE)
(74) Vertreter: Hirsch, Hans-Ludwig
(86) Internationale Anmeldenummer: PCT/EP2004/052675
(87) Internationale Veröffentlichungsnummer: WO 2005/063781

(56) Entgegenhaltungen:
- WO-A1-03/016320
- WO-A1-03/076448
- WO-A2-03/016321
- WO-A2-03/078444
- DE-A1- 10 053 272
- DE-A1- 10 140 072

## Beschreibung

Die vorliegende Erfindung betrifft ein Verfahren zur Herstellung von Organoacylphosphiten und gegebenenfalls Organoacylphosphoniten und Organoacylphosphiniten, die eine Organophosphitstruktureinheit aufweisen, durch Kondensation von Phosphortrihalogeniden oder Organophosphorhalogeniden mit einer Verbindung die eine Salicylsäuregruppe aufweist und gegebenenfalls weiteren Hydroxy-Gruppen tragenden Verbindungen in Gegenwart von polymeren basischen Ionentauscherharzen.

Organophosphor-Verbindungen haben wegen ihres breiten Anwendungsbereichs eine erhebliche industrielle Bedeutung erlangt. Sie werden beispielsweise als Weichmacher, Flammschutzmittel, UV-Stabilisatoren und Antioxidantien eingesetzt. Darüber hinaus stellen sie wichtige Zwischenprodukte bei der Herstellung von Fungiziden, Herbiziden, Insektiziden und Pharmazeutika dar. Entsprechend ist eine große Zahl von Herstellungsverfahren entwickelt worden. Eine besondere Bedeutung unter den Organophosphor-Verbindungen hat die Substanzklasse der Organophosphite. Ein Überblick über die Herstellungsmethoden für Organophosphite ist u.a. von K. Sasse in "Methoden der Organischen Chemie" (Houben-Weyl), Band XII/2, Kapitel 1, Thieme Verlag, Stuttgart (1964) und L. Maier, G. Kosolapoff, "Organic Phosphorus Compounds, Band 4, John Wiley & Sons, S. 255 - 462 sowie den darin enthaltenen Literaturverweisen zu finden.

Die Herstellung von Triarylphosphiten durch Umsetzung von Phosphortrihalogeniden mit geeigneten Phenolen gelingt in Anwesenheit eines Katalysators in einem inerten Lösemittel bei Temperaturen von 150 bis 200 °C (DE 20 28 878, DE 20 07 070). Der entstehende Chlorwasserstoff wird in-situ abdestilliert. Dieses Verfahren weist eine Reihe von Nachteilen auf. Um die in-situ-Destillation des Chlorwasserstoffs zu bewerkstelligen sind hohe Temperaturen notwendig. Besonders bei erhöhter Temperatur ist Chlorwasserstoff ausgesprochen korrosiv und erfordert daher den Einsatz spezieller Materialien beim Anlagenbau. Zudem sind die Reaktionszeiten sehr lang, was einen hohen Anteil an Nebenprodukten und damit eine aufwändige Reinigung des Rohprodukts zur Folge hat.

Technisch vorteilhafter ist deshalb oft die Kondensation von Phosphortrihalogeniden, Monoaryldichlorophosphiten oder Halogendiarylchlorophosphiten mit Phenolen in Gegenwart von basischen Verbindungen, die den entstehenden Chlorwasserstoff abfangen. Als Basen werden meist Stickstoffverbindungen eingesetzt, etwa Trialkylamine (DD 301615, US 4,415,686, JP 54030140), Dimethylformamid (JP 10053595, EP 511156), N,N-Dialkylaniline oder Stickstoff-Heterocyclen wie Pyridin (G. Kosolapoff, "Organophosphorus Compounds", John Wiley & Sons (1950), S.184). Andere Verfahren wenden Alkali- und/oder Erdalkalihydroxide an (EP 0032202). In JP 54030140 ist die Kondensation von Phosphortrihalogeniden mit Phenolen in Gegenwart unterstöchiometrischer Mengen von Aminen, Ammoniumsalzen, Carbonsäuren, Guanidinen, Amiden, Amidinen, Sulfonen und Phosphinen beschrieben.

Die Schrift WO 91/09040 beschreibt die Herstellung von sterisch gehinderten Triarylphosphiten, ausgehend von den korrespondierenden Phenolen und Phosphortrihalogenid in Anwesenheit von Mercaptothiazolen und Dithiocarbaminsäure-Derivaten.

In WO 03/078444 wird die Herstellung von Silyl-Gruppen als Substituenten aufweisenden Verbindungen, die als Phosoxophosphite bezeichnet werden, durch Reaktion von geeigneten Phosphorhalogen-Verbindungen mit einer eine Säure und eine OH-Gruppe aufweisende Verbindung in Gegenwart von Triethylamin beschrieben.

Ein Überblick über die Synthesemethoden der Organophosphonite ist beispielsweise in Houben-Weyl, "Methoden der Organischen Chemie", XII/1, S. 44 ff. gegeben. Ein Überblick über die Methoden für die Synthese von Organophosphiniten ist in Houben-Weyl, "Methoden der Organischen Chemie", XII/1, S. 210 ff. gegeben.

Ein Nachteil der technisch bekannten Verfahren ist die Abtrennung der Base und/oder ihrer Reaktionsprodukte bzw. der Katalysatoren bei der Aufarbeitung des Organophosphor-Rohprodukts. Eine destillative Trennung ist wegen der geringen Dampfdrücke der beteiligten Komponenten oft schwer möglich oder sogar unmöglich Wenn eine feste Base eingesetzt wird und/oder die Reaktionsprodukte der Base in fester Form anfallen oder eine Ausfällung der Base und/oder ihrer Reaktionsprodukte möglich ist, kann eine Abtrennung vom Rohprodukt durch Filtration oder Sedimentation erfolgen. Diese Trennoperationen sind bekanntermaßen im industriellen Maßstab, insbesondere bei kontinuierlicher Verfahrensweise, im technischen Aufbau und Betrieb ausgesprochen aufwändig. Sie sind empfindlich gegenüber Änderungen der Betriebsparameter und/oder Art und Eigenschaften der zu trennenden Substanzen. In der Regel ist auch der Einsatz großer Lösemittelmengen erforderlich, zum Beispiel, um Wertprodukt vom Filterkuchen zu waschen. Dies gelingt oft jedoch nur unvollständig (US 5,710,307).

Bei Einsatz von tertiären Aminen, insbesondere Triethylamin, können die ausfallenden Trialkylammoniumhalogenide zu einem starken Anstieg der Viskosität der Reaktionsmasse und zur Bildung von Wandbelägen führen. Unter diesen Bedingungen sind Rühren und Wärmeaustausch erheblich erschwert. Um diesem Nachteil zu begegnen, schlägt die Schrift EP 1 234 831 längerkettige tertiäre Amine wie Tri-n-propylamin, Tri-iso-propylamin, Tri-n-butylamin, Tri-iso-butylamin und Tritert-butylamin vor. Die weiter oben genanten prinzipiellen Nachteile der Filtration bleiben im technischen Maßstab aber dennoch bestehen.

Eine weitere Aufarbeitung der Organophosphor-Rohprodukte kann durch dem Fachmann bekannte Verfahren erfolgen, beispielsweise durch (fraktionierte) Kristallisation, Sublimation, Fällung oder chromatographische Verfahren ggf. auch durch Destillation oder Rektifikation. Auch der Einsatz dieser Trennverfahren ist im industriellen Maßstab mit großem technischen Aufwand verbunden.

Die Schrift EP 0 285 136 beansprucht ein Verfahren zur Reinigung von tertiären Organophosphiten von fünfwertigen Organophosphor-Verbindungen, die als Nebenprodukte der Synthese oder auch als Abbau- bzw. Hydrolyseprodukte der tertiären Organophosphite entstehen. Das Verfahren sieht eine Behandlung des gelösten verunreinigten Organophosphits mit Wasser bei erhöhter Temperatur in Gegenwart einer Lewis-Base vor. Als Lewis-Basen werden anorganische Salze (Carbonate, Hydroxide, Oxide), tertiäre Amine und Polymere, die Amin-Gruppen tragen.

Die Synthese der Organophosphor-Verbindungen selbst wird jedoch nicht angesprochen. Ein Nachteil des beanspruchten Verfahrens liegt in der Behandlung mit Wasser. Nicht nur die zu entfernenden Verunreinigungen sondern auch die tertiären Organophosphite selbst, insbesondere (Organo-)Chlorphosphite selbst reagieren unter den genannten Bedingungen, so dass, je nach Hydrolysestabilität der Organophosphite, ein Teil des Wertprodukts verloren geht.

In DE 100 53 272 wird die Herstellung von Diphosphiten beschrieben, bei denen eine Phosphiteinheit einen Salicylsäurebaustein aufweist. In DE 100 58 383 wird die Herstellung von Phosphininen beschrieben, die zumindest zwei Phosphoratome aufweisen. In DE 101 14 868 wird die Herstellung von Diphosphinen beschrieben. In DE 101 40 083 und DE 101 40 072 wird die Herstellung von Diphosphiten beschrieben, bei denen beide Phosphiteinheiten einen Salicylsäurebaustein aufweisen. In DE 101 400 86 wird die Herstellung von Monophosphiten beschrieben, die einen Salicylsäurebaustein aufweisen. In DE 102 10 918 wird die Herstellung von Diphosphiten beschrieben, bei denen zumindest ein Phosphit ebenfalls ein Salicylsäurebaustein aufweist. In allen vorgenannten Dokumenten wird bei der Umsetzung von Phosphorhalogeniden mit Alkoholen die Verwendung von tertiären Aminen, insbesondere von Triethylamin, Pyridin oder N-Methylpyrrolidinon, beschrieben.

Die bekannten Verfahren weisen einen oder mehrere der folgenden Nachteile auf:
a) Die vollständige Abtrennung der eingesetzten Base vom Zielprodukt ist aufwändig
b) Die bei der Umsetzung entstandenen Salze der eingesetzten Base sind häufig voluminös oder fallen in einer Korngrößenverteilung an, die die Abtrennung durch Filtration erschwert.
c) Die Einhaltung der gewünschten Reaktionstemperatur ist wegen der hohen Exothermie schwierig.

Die Aufgabe der vorliegenden Erfindung bestand deshalb in der Bereitstellung eines einfachen Verfahrens zur Herstellung von dreiwertigen Organophosphor-Verbindungen, das einen oder mehrere dieser Nachteile nicht aufweist.

Überraschenderweise wurde gefunden, dass diese Aufgabe dadurch gelöst werden kann, dass trivalente organische Phosphorverbindungen, die mindestens eine P-O-Bindung aufweist, durch Umsetzung von einer trivalenten Phosphorverbindung, bei der mindestens ein Halogenatom am Phosphoratom gebunden ist, mit einer organischen Verbindung, die mindestens eine OH-Gruppe aufweist, in Gegenwart eines Ionenaustauscherharzes hergestellt werden. Trotzdem die Base in heterogener Phase vorliegt, wird überraschenderweise eine ausreichendes Abfangen des freiwerdenden Halogenwasserstoffs erzielt.

Gegenstand der vorliegenden Erfindung ist deshalb ein Verfahren zur Herstellung von dreiwertigen Organophosphor-Verbindungen, die zumindest eine Struktureinheit S 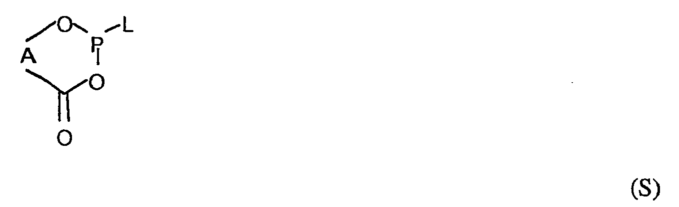 wobei A ein zweibindiger substituierter oder unsubstituierter Alkyl- oder Arylrest, der ein Ringsystem gemäß Struktureinheit S bilden kann, aufweist, der Rest L ein über ein Sauerstoff- oder Kohlenstoffatom an das Phosphoratom gebundener organischer Rest oder ein Halogenid ist,
durch Kondensation von Phosphorverbindungen der Formel i

PHalₐR₍₃₋ₐ₎ (i)

wobei Hal gleich Halogenid, ausgewählt aus Chlor, Brom und Iod, wobei die Halogenide gleich oder unterschiedlich sein können, R gleich über ein Kohlenstoff- oder Sauerstoff-Atom an das Phosphor gebundener organischer Rest und a = 2 oder 3 bedeuten,
mit einer organischen Verbindung der Formel S' 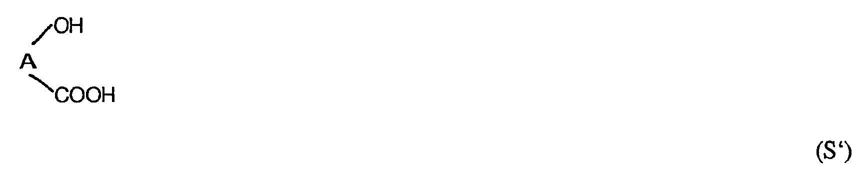 wobei A die für die Struktureinheit S genannte Bedeutung hat, welches dadurch gekennzeichnet ist, dass die Umsetzung in Gegenwart zumindest eines basischen Ionenaustauscherharzes durchgeführt wird.

Insbesondere ist Gegenstand der vorliegenden Erfindung ein Verfahren zur Herstellung von dreiwertigen Organophosphor-Verbindungen, die zumindest eine Struktureinheit **T** 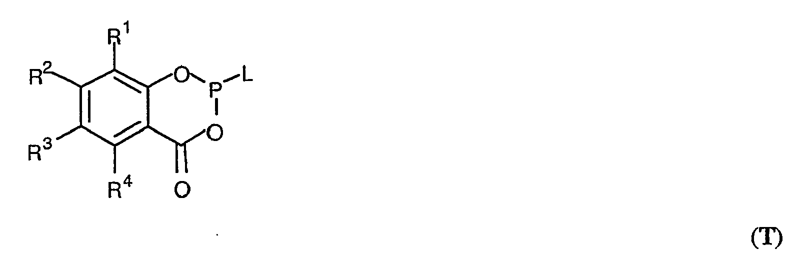 wobei R¹, R², R³, und R⁴ jeweils unabhängig voneinander ausgewählt sind aus einwertigen substituierten oder unsubstituierten aliphatischen, alicyclischen, aromatischen, heteroaromatischen, gemischt aliphatisch-alicyclischen, gemischt aliphatisch-aromatischen, heterocyclischen, gemischt aliphatisch-heterocyclischen Kohlenwasserstoffresten mit 1 bis 50 Kohlenstoffatomen, H, F, Cl, Br, I, -CF₃, -CH₂(CF₂)ⱼCF₃ mit j = 0 - 9, -OR⁹, -COR⁹, -CO₂R⁹, -CO₂M, -SR⁹, -SO₂R⁹, -SOR⁹, -SO₃R⁹, -SO₃M, -SO₂NR⁹R¹⁰, -NR⁹R¹⁰, -N=CR⁹R¹⁰, wobei R⁹ und R¹⁰ unabhängig voneinander aus H, einwertigen substituierten oder unsubstituierten aliphatischen und aromatischen Kohlenwasserstoffresten mit 1 bis 25 Kohlenstoffatomen ausgewählt sind und M ein Alkalimetall-, formal ein halbes Erdalkalimetall-, Ammonium- oder Phosphoniumion ist, oder benachbarte Reste R¹ bis R⁴ zusammen ein kondensiertes substituiertes oder unsubstituiertes aromatisches, heteroaromatisches, aliphatisches, gemischt aromatisch-aliphatisches oder gemischt heteroaromatisch-aliphatisches Ringsystem ausbilden; wobei die substituierten Kohlenwasserstoffreste als Substituenten solche, ausgewählt aus -N(R⁵)₂, -NHR⁵, -NH₂, Fluor, Chlor, Brom, Jod, -OH, -CN, -C(O)-R⁵, - C(O)H oder -C(O)O-R⁵, -CF₃, -O-R⁵, -C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen und die Reste R¹, R², R³ und R⁴ gleich oder unterschiedlich sind, und L gleich einem über ein Sauerstoff- oder Kohlenstoffatom an das Phosphoratom gebundener organischer Rest oder ein Halogenid ist,
aufweisen, durch Kondensation von Phosphorverbindungen der Formel i

PHalₐR₍₃₋ₐ₎ (i)

wobei Hal gleich Halogenid, ausgewählt aus Chlor, Brom und Iod, wobei die Halogenide gleich oder unterschiedlich sein können, R gleich über ein Kohlenstoff- oder Sauerstoff-Atom an das Phosphor gebundener organischer Rest und a = 2 oder 3 bedeuten,
mit einer organischen Verbindung der Formel **T'** 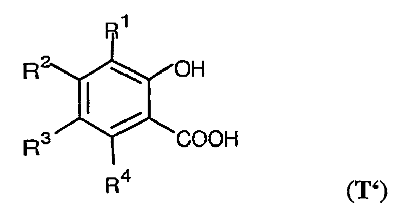 wobei die Reste R¹ bis R⁴ die für die Struktureinheit T genannte Bedeutung haben,
welches dadurch gekennzeichnet ist, dass die Umsetzung in Gegenwart zumindest eines basischen Ionenaustauscherharzes durchgeführt wird.

Das erfindungsgemäße Verfahren hat gegenüber den herkömmlichen Verfahren folgende Vorteile:
a) Es entstehen keine salzartigen Nebenprodukte, die nur schwer vom Zielprodukt getrennt werden können.
b) Die eingesetzte Base liegt als Feststoff vor, der trotz Reaktion mit dem Halogenwasserstoff seinen Aggregatzustand nicht ändert und seine Größe im Wesentlichen beibehält. Der üblicherweise als Packung oder Perlen vorliegende Ionenaustauscher des erfindungsgemäßen Verfahrens kann mit einfachsten Mitteln aus dem Reaktionsgemisch entfernt werden, z.B. durch Verwendung von grobmaschigen, auf die Größe der Ionentauscherpartikel abgestimmten Sieben.
c) Ein Anhaften von großen Mengen an Wertprodukt wird allein durch die Größe und Form des Ionenaustauschers verhindert. Durch die Verwendung von Packungen bzw. Partikeln von relativ großer Partikelgröße ist die Oberfläche des Ionenaustauschers im Vergleich zum Volumen klein gegenüber einer Ausgefällten Base herkömmlicher Art. Es sind deshalb bei dem erfindungsgemäßen Verfahren auch nur geringe Mengen an Lösemittel notwendig, um evtl. anhaftendes Wertprodukt von der Oberfläche der verbrauchten Base abzuspülen.
d) Bei Verwendung von Ionentauscher ist die Geschwindigkeitskonstante der Umsetzung geringer als bei Verwendung von homogen gelösten Basen. Dadurch bedingt, wird die exotherme Reaktion leicht beherrschbar.
e) Es entstehen während der Reaktion keine voluminösen Salze, die aufgrund der durch sie bewirkten Anstiegs der Viskosität Konzentrations- und Temperaturunterschiede im Reaktionsgemisch verursachen können.

Das erfindungsgemäße Verfahren wird nachfolgend beispielhaft beschrieben, ohne dass die Erfindung auf diese Ausführungsformen beschränkt sein soll. Dem Fachmann ergeben sich weitere Varianten, die ebenfalls Gegenstand der vorliegenden Erfindung, deren Anwendungsbreite sich aus der Beschreibung und den Patentansprüchen ergibt, sind.

Das erfindungsgemäße Verfahren zur Herstellung von dreiwertigen Organophosphor-Verbindungen, die zumindest eine Struktureinheit **S** 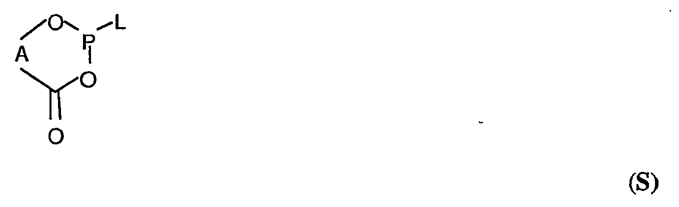 wobei A ein zweibindiger substituierter oder unsubstituierter Alkyl- oder Arylrest, der ein Ringsystem gemäß Struktureinheit S bilden kann, aufweist, der Rest L ein über ein Sauerstoff- oder Kohlenstoffatom an das Phosphoratom gebundener organischer Rest oder ein Halogenid ist,
durch Kondensation von Phosphorverbindungen der Formel **i**

PHalₐR₍₃₋ₐ₎ (**i**)

wobei Hal gleich Halogenid, ausgewählt aus Chlor, Brom und Iod, wobei die Halogenide gleich oder unterschiedlich sein können, R gleich über ein Kohlenstoff- oder Sauerstoff-Atom an das Phosphor gebundener organischer Rest und a = 2 oder 3 bedeuten,
mit einer organischen Verbindung der Formel **S'** 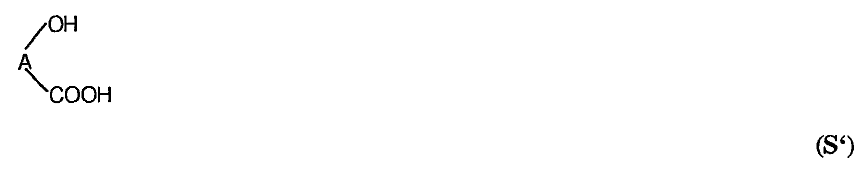 wobei A die für die Struktureinheit S genannte Bedeutung hat, zeichnet sich dadurch aus, dass die Umsetzung in Gegenwart zumindest eines basischen Ionenaustauscherharzes, vorzugsweise in der Form der freien Amine vorliegenden (also nicht in der OH-Form vorliegender) Ionenaustauscherharzes durchgeführt wird.

Handelt es sich bei dem Rest A um einen Arylrest so ist dieser bevorzugt über zwei benachbarte Bindungen (z.B. 1,2-Aryl oder 2,3-Aryl) an den Rest der Struktureinheit S gebunden, so dass die Struktureinheit S einen 6 Atome (ein P-Atom, zwei O-Atome und 3 C-Atome) aufweisenden Ring aufweist. Weist die Struktureinheit S als zweibindigen Rest A einen Alkylrest auf, so weist dieser in der Kette, die mit der Struktureinheit an beiden Enden verbunden ist, bevorzugt von 1 bis 3, besonders bevorzugt 1 oder 2 Kohlenstoffatome auf. Der Rest A kann weitere Kohlenstoffatome, vorzugsweise von 1 bis 20 C-Atome aufweisen, die in Form von einem oder mehreren Substituenten, wie z.B. Akylresten, an den oder die Kohlenstoffatome der Kette im Fall eines Alkylrests oder an die nicht mit der Struktureinheit S verbundenen Kohlenstoffatome des Arylrests gebunden sind. Neben reinen Kohlenwasserstoffresten als Substituenten können die Reste A auch weitere Substituenten aufweisen, mit der Maßgabe, dass diese Substituenten die Eigenschaften, insbesondere bezüglich der Wirksamkeit als Ligand nicht beeinflussen. Mögliche Substituenten können z.B. ausgewählt sein aus den Halogenen, Nitro-, Cyano-, Alkoxy-, Ether- oder Alkoholgruppen. Typische Reste A können z.B. -CH₂-, -CH₂CH₂-, -CH₂CH₂CH₂-, 1,2-Phenylen (-C₆H₄-), 1,2-Naphthylen (-C₁₀H₆-), 2,3-Naphthylen, 3, 5-Dichloro-1,2- Phenylen, 3,5-Dibromo-1,2-Phenylen, 3-Iodo-5-Methyl-1,2-Phenylen, 3,5-Diisopropyl-1,2-Phenylen, 3,5,6-Trichloro-1,2-Phenylen, 3-Phenyl-1,2-Phenylen, 1,1-Diethyl-1,1-Methylen, 1,1-Cyclohexyliden, 1,1-Cycloheptyliden, 3-Isopropyl-6-Methyl-1,2-phenylen und ähnliche Reste sein. Bevorzugt ist der Rest A ausgewählt aus 1,1-Alkyl, 1,2-Alkyl, 1,2-Phenylen, 1,2-Naphthylen und 2,3-Naphthylen als zweiwertige Reste oder substituierten Derivaten davon, insbesondere Halogen- oder Alkyl-substitutierten Derivaten.

Besonderes geeignet ist das erfindungsgemäße Verfahren zur Herstellung von dreiwertigen Organophosphor-Verbindungen, die zumindest eine Struktureinheit **T** 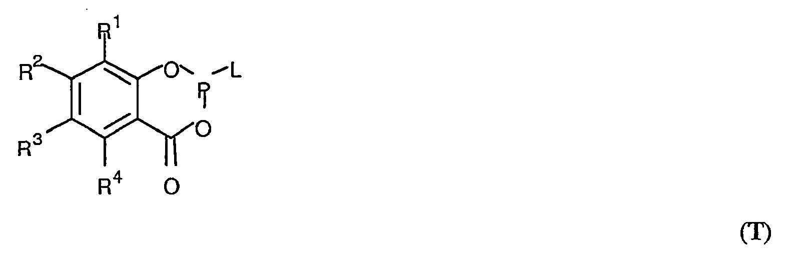 wobei R¹, R², R³, und R⁴ jeweils unabhängig voneinander ausgewählt sind aus einwertigen substituierten oder unsubstituierten aliphatischen, alicyclischen, aromatischen, heteroaromatischen, gemischt aliphatisch-alicyclischen, gemischt aliphatisch-aromatischen, heterocyclischen, gemischt aliphatisch-heterocyclischen Kohlenwasserstoffresten mit 1 bis 50 Kohlenstoffatomen, H, F, Cl, Br, I, -CF₃, -CH₂(CF₂)ⱼCF₃ mit j = 0 - 9, -OR⁹, -COR⁹, -CO₂R⁹, -CO₂M, -SR⁹, -SO₂R⁹, -SOR⁹, -SO₃R⁹, -SO₃M, -SO₂NR⁹R¹⁰, -NR⁹R¹⁰, -N=CR⁹R¹⁰, -SiR⁹R¹⁰R¹¹ wobei R⁹, R¹⁰ und R¹¹ unabhängig voneinander aus H, einwertigen substituierten oder unsubstituierten aliphatischen und aromatischen Kohlenwasserstoffresten mit 1 bis 25 Kohlenstoffatomen ausgewählt sind und M ein Alkalimetall-, formal ein halbes Erdalkalimetall-, Ammonium- oder Phosphoniumion ist, oder benachbarte Reste R¹ bis R⁴ zusammen ein kondensiertes substituiertes oder unsubstituiertes aromatisches, heteroaromatisches, aliphatisches, gemischt aromatisch-aliphatisches oder gemischt heteroaromatisch-aliphatisches Ringsystem ausbilden; wobei die substituierten Kohlenwasserstoffreste als Substituenten solche, ausgewählt aus -N(R⁵)₂, -NHR⁵, -NH₂, Fluor, Chlor, Brom, Jod, -OH, - CN, -C(O)-R⁵, -C(O)H oder -C(O)O-R⁵, -CF₃, -O-R⁵, -C(O)N-R⁵, -OC(O)-R⁵ und/oder - Si(R⁵)₃, mit R⁵ gleich einem monovalenten, bevorzugt 1 bis 20 Kohlenstoffatome aufweisenden Kohlenwasserstoffrest, wie z.B. einem Alkylrest, insbesondere Methyl-, Ethyl-, Propyl-, oder tert.-Butylrest, einem Cycloalkylrest, insbesondere Cyclopentyl- oder Cyclohexylrest oder einem Arylrest, insbesondere Phenyl- oder Naphtylrest, wobei wenn mehrere Kohlenwasserstoffreste R⁵ vorhanden sind, diese gleich oder unterschiedlich sein können, aufweisen und die Reste R¹, R², R³ und R⁴ gleich oder unterschiedlich sind, und L gleich einem über ein Sauerstoff- oder Kohlenstoffatom an das Phosphoratom gebundener organischer Rest oder ein Halogenid ist, aufweisen, durch Kondensation von Phosphorverbindungen der Formel **i**

PHalₐR₍₃₋ₐ₎ (**i**)

wobei Hal gleich Halogenid, ausgewählt aus Chlor, Brom und Iod, wobei die Halogenide gleich oder unterschiedlich sein können, R gleich über ein Kohlenstoff- oder Sauerstoff-Atom an das Phosphor gebundener organischer Rest und a = 2 oder 3 bedeuten,
mit einer organischen Verbindung der Formel **T'** 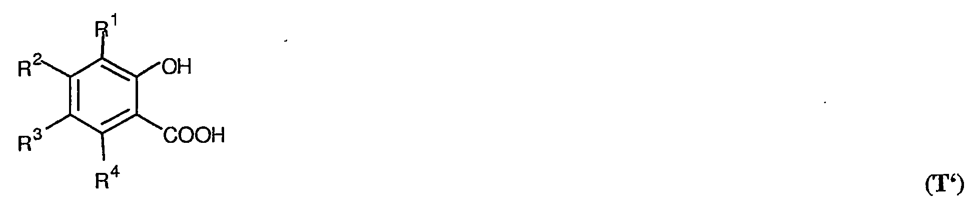 wobei die Reste R¹ bis R⁴ die für die Struktureinheit **T** genannte Bedeutung haben.

Nachfolgend wird das erfindungsgemäße Verfahren meist beispielhaft an Hand von Verbindungen, die das Strukturelement **T** als spezielle Form des Strukturelementes **S** aufweisen beschrieben, ohne dass die Erfindung auf diese Strukturelemente **T** beschränkt sein soll.

Die Phosphorverbindungen i weisen als Halogenid Hal vorzugsweise Chlor auf. Die Reste R¹ und R², R² und R³ oder R³ und R⁴ können insbesondere benzanniliert sein. Nicht benzannilierte Reste R¹ bis R⁴ können insbesondere primäre, sekundäre oder tertiäre Alkylgruppen, wie Methyl, Ethyl, n-Propyl, i-Propyl, n-Butyl, i-Butyl, t-Butyl, Amyl, sec-Amyl, t-Amyl, 2-Ethylhexyl, i-Nonyl, alicyclische Gruppen wie Cyclohexyl, Methylcyclohexyl oder Cyclooctyl oder aromatische Gruppen wie Phenyl, Naphtyl, Tolyl oder Xylyl sein. Der organische Rest R bzw. L kann insbesondere ein Rest W sein, der ein substituierter oder unsubstituierter, aliphatischer, alicyclischer, aliphatisch-alicyclischer, heterocyclischer, aliphatisch-heterocyclischer, aromatisch-aromatischer oder aliphatisch-aromatischer Kohlenwasserstoffrest mit 1 bis 50 Kohlenstoffatomen sein kann, wobei die substituierten Kohlenwasserstoffreste als Substituenten solche, ausgewählt aus -N(R⁵)₂, -NHR⁵, -NH₂, Fluor, Chlor, Brom, Jod, -OH, -CN, -C(O)-R⁵, -C(O)H oder -C(O)O-R⁵, -CF₃, -O-R⁵, -C(O)N-R⁵, - OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen oder ein organischer Rest gemäß der Definition des Restes W, der zumindest einen substituierten oder unsubstituierten Phosphit-, Phosphonit-, Phosphinit- und/oder Acylphospit-Rest aufweist, wobei die Substituenten ausgewählt sein können aus denen für den Rest W definierten. Die Substituenten sind vorzugsweise beschränkt auf solche, die keinen Einfluss auf die Reaktion selbst haben. Besonders bevorzugte Substituenten für die organischen Reste R oder L können ausgewählt sein aus den Halogenen, wie z.B. Chlor, Brom oder Jod, den Alkylresten, wie z.B. Methyl, Ethyl, Propyl, iso-Propyl, Butyl, sec.-Butyl, t-Butyl, neo-Pentyl, sec-Amyl, t-Amyl, iso-Octyl, t-Octyl, 2-Ethylhexyl, iso-Nonyl, iso-Decyl oder Octadecyl, den Arylresten, wie z.B. Phenyl, Naphthyl oder Anthracyl, den Alkylarylresten, wie z.B. Tolyl, Xylyl, Dimethylphenyl, Diethylphenyl, Trimethylphenyl, Triethylphenyl oder p-Alkylphenyl, den Aralkylresten, wie z.B. Benzyl oder Phenylethyl, den alicyclischen Resten, wie z.B. Cyclopentyl, Cyclohexyl, Cyclooctyl, Cyclohexylethyl oder 1-Methylcyclohexyl, den Alkoxyresten, wie z.B. Methoxy, Ethoxy, Propoxy, Butoxy oder Pentoxy, den Aryloxyresten, wie z.B. Phenoxy oder Naphthoxy, -OC(O)R⁵ oder -C(O)R⁵, mit R5 gleich einem monovalenten Kohlenwasserstoffrest, wie z.B. Acetyl, Propionyl, Trimethylacetoxy, Triethylacetoxy oder Triphenylacetoxy, und den drei Kohlenwasserstoffreste aufweisenden Silylresten (-Si(R)₃, wie z.B. Trimethylsilyl, Triethylsilyl oder Triphenylsilyl.

Weisen die in dem erfindungsgemäßen Verfahren eingesetzten Verbindungen Amingruppen, also - NH₂, -N(R⁵)₂ bzw. -N(Alkyl)₂ oder -NH(Alkyl) bzw. -NHR⁵, auf, so müssen diese in Gleichgewichtsreaktionen gegenüber den Amingruppen des Ionenaustauschers als schwächere Base fungieren. Verbindungen die Amingruppen aufweisen und die diese Bedingung nicht erfüllen können nicht (direkt) als Edukte in dem erfindungsgemäßen Verfahren eingesetzt werden. Eine Möglichkeit den Einsatz solcher Verbindungen doch zu ermöglichen besteht darin, die entsprechenden Gruppen durch den Einbau von Schutzgruppen auf bekannte Art und Weise zu schützen und nach der Durchführung des erfindungsgemäßen Verfahren die Schutzgruppe wieder zu entfernen.

Mittels des erfindungsgemäßen Verfahrens können bevorzugt als dreiwertige Organophosphor-Verbindungen solche hergestellt werden, die ausgewählt aus den Verbindungen der nachfolgenden Formeln 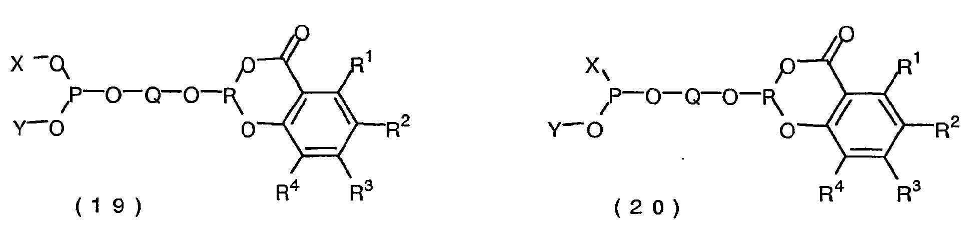 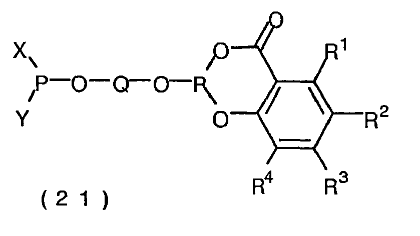 wobei X und Y gleich substituierte oder unsubstituierte, aliphatische, alicyclische, aliphatisch-alicyclische, heterocyclische, aliphatisch-heterocyclische, aromatisch-aromatische oder aliphatisch-aromatische Kohlenwasserstoffreste mit 1 bis 50 Kohlenstoffatomen, wobei X und Y gleich oder unterschiedlich oder kovalent miteinander verknüpft sind, und mit Q gleich ein zumindest zweiwertiger, substituierter oder unsubstituierter aliphatischer, alicyclischer, aliphatisch-alicyclischer, heterocyclischer, aliphatisch-heterocyclischer, aromatischer, aromatisch-aromatischer oder aliphatisch-aromatischer Kohlenwasserstoffrest, wobei die substituierten Kohlenwasserstoffreste als Substituenten solche, ausgewählt aus -N(R⁵)₂, -NHR⁵, -NH₂, Fluor, Chlor, Brom, Jod, -OH, -CN, - C(O)-R⁵, -C(O)H oder -C(O)O-R⁵, -CF₃, -O-R⁵, -C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, , aufweisen und wobei R¹ bis R⁴ die oben genannte Bedeutung haben können. Die Substituenten sind vorzugsweise beschränkt auf solche, die keinen Einfluss auf die Reaktion selbst haben. Besonders bevorzugte Substituenten können ausgewählt sein aus den für R und L angegebenen bevorzugten Substituenten.

Ebenso ist es mit dem erfindungsgemäßen Verfahren möglich als dreiwertige Organophosphor-Verbindungen Phosphite der Formel **10** oder **11** 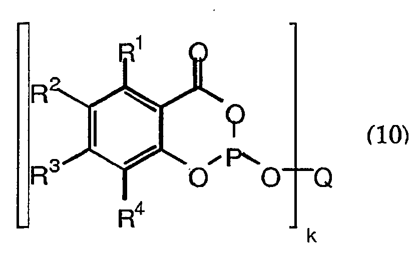 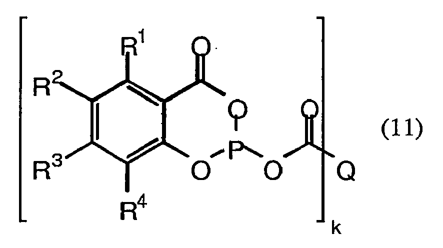 wobei R¹, R², R³, und R⁴ die oben angegebene Bedeutung haben, Q ein k-bindiger substituierter oder unsubstituierter aliphatischer, alicyclischer, gemischt aliphatisch-alicyclischer, heterocyclischer, gemischt aliphatisch-heterocyclischer, aromatischer, heteroaromatischer, gemischt aliphatisch-aromatischer Kohlenwasserstoffrest mit 1 bis 50 Kohlenstoffatomen ist, wobei aliphatische Anteile von Q Sauerstoff, Schwefel- und/oder Stickstoff enthalten können, und wobei die substituierten Kohlenwasserstoffreste als Substituenten solche, ausgewählt aus -N(R⁵)₂, -NHR⁵, -NH₂, Fluor, Chlor, Brom, Jod, -OH, -CN, -C(O)-R⁵, -C(O)H oder -C(O)O-R⁵, -CF₃, -O-R⁵, -C(O)N-R⁵, - OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen, k mindestens 2 ist und die Bedeutung von R¹, R², R³ und R⁴ in den einzelnen an **Q** gebundenen Strukturelementen **T** jeweils gleich oder unterschiedlich ist, herzustellen. Die Substituenten sind vorzugsweise beschränkt auf solche, die keinen Einfluss auf die Reaktion selbst haben. Besonders bevorzugte Substituenten können ausgewählt sein aus den für R und L angegebenen bevorzugten Substituenten.
Ebenso können mit dem erfindungsgemäßen Verfahren die in WO 03/078444 beschriebenen, als Phosoxophite bezeichneten Verbindungen, hergestellt werden.

Die Herstellung von Bisphosphiten der Struktur **19** erfolgt bevorzugt durch Kondensation von zumindest zweifach OH-substituierten Kohlenwasserstoffen Q', wobei Q' ein substituierter oder unsubstituierter aliphatischer, alicyclischer, gemischt aliphatisch-alicyclischer, heterocyclischer, gemischt aliphatisch-heterocyclischer, aromatischer, heteroaromatischer, gemischt aliphatisch-aromatischer Kohlenwasserstoff mit 1 bis 50 Kohlenstoffatomen ist, wobei aliphatische Anteile von Q' Sauerstoff, Schwefel- und/oder Stickstoff enthalten können, und wobei die substituierten Kohlenwasserstoffe als Substituenten solche, ausgewählt aus -N(R⁵)₂, -NHR⁵, -NH₂, Fluor, Chlor, Brom, Jod, -OH, -CN, -C(O)-R⁵, -C(O)H oder -C(O)O-R⁵, -CF₃, -O-R⁵, -C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen, mit Diorganohalogenphosphiten **2** und Salicylphosphorhalogenid-Derivaten **T** mit **L** = Hal in Gegenwart eines oder mehrerer basischer Ionentauscherharze. Die Substituenten sind vorzugsweise beschränkt auf solche, die keinen Einfluss auf die Reaktion selbst haben. Besonders bevorzugte Substituenten für Q' können ausgewählt sein aus den für R und L angegebenen bevorzugten Substituenten.

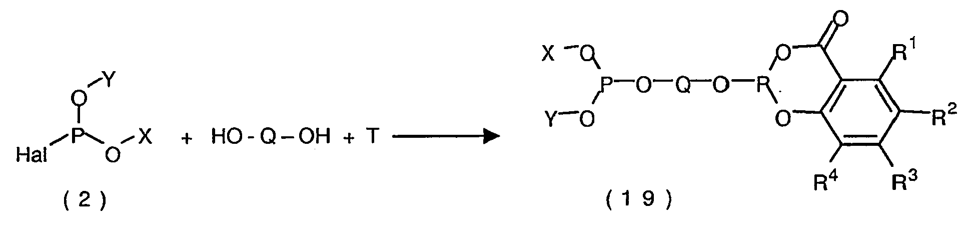

Die Herstellung von Phosphit-Phosphonit-Verbindungen der Struktur **20** mittels des erfindungsgemäßen Verfahrens erfolgt bevorzugt durch Kondensation von zweifach OH-substituierten Kohlenwasserstoffen Q' mit Halogenorganophosphoniten **4** und Salicylphosphorhalogenid-Derivaten **T** mit L = Hal in Gegenwart eines oder mehrerer basischer Ionentauscherharze.

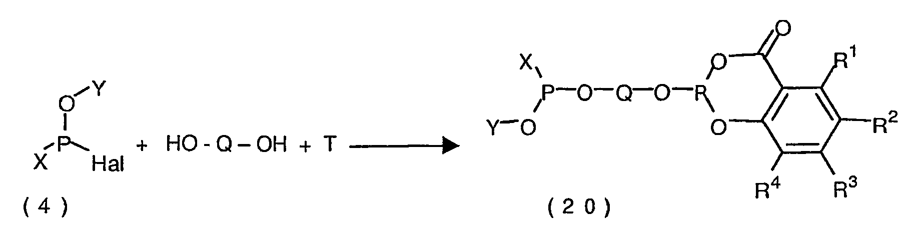

Die Herstellung von Phosphit-Phosphonit-Verbindungen der Struktur **21** mittels des erfindungsgemäßen Verfahrens erfolgt bevorzugt durch Kondensation von zweifach OH-substituierten Kohlenwasserstoffen Q' mit Halogenorganophosphiniten **9** und Salicylphosphorhalogenid-Derivaten **T** mit L = Hal in Gegenwart eines oder mehrerer basischer Ionentauscherharze.

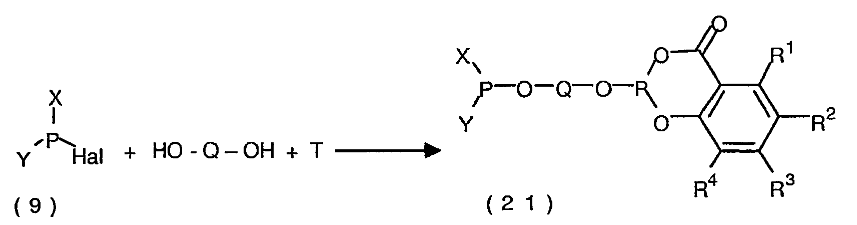

In den Formeln **19** bis **21** können X und Y die bereits genannten Bedeutungen haben. Die Kohlenwasserstoffe Q' weisen zumindest zwei OH-Gruppen auf. Vorzugsweise sind die zwei OH-Gruppen aufweisenden Kohlenwasserstoffe Q' Verbindungen, ausgewählt aus den subsituierten oder unsubstituierten Verbindungen 1,4-Dihydroxybenzol, 1,2-Dihydroxybenzol, 1,8-Dihydroxynaphtalin, 1,1'-Binaphtyl-2,2'-diol oder 2,2'-Binaphtyl-1,1'-diol.

Als Phosphorverbindung der Formel **i** wird vorzugsweise zumindest eine Verbindung ausgewählt aus den Verbindungen der nachfolgenden Formeln eingesetzt: 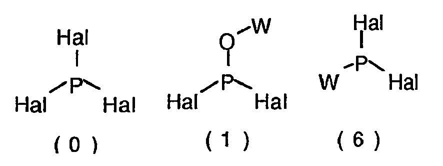 mit W gleich organischer Rest mit der oben genannten Bedeutung. Als Phosphorverbindung der Formel i kann insbesondere eine Verbindung der Formel **1** eingesetzt werden, die durch Umsetzung einer Verbindung **0** mit einer zumindest eine Hydroxy-Gruppe aufweisenden organischen Verbindung W', vorzugsweise ebenfalls in Gegenwart eines basischen Ionenaustauschers hergestellt wird. Als zumindest eine Hydroxy-Gruppe aufweisende Verbindung W', können eine OH-Gruppe aufweisende substituierte oder unsubstituierte Verbindung, z. B. ausgewählt aus Methanol, Ethanol, n-Propanol, i-Propanol, 1-Butanol, 2-Butanol, t-Butanol, 2-Ethylhexanol, i-Nonanol, i-Decanol, i-Tridecanol, Phenol, Phenol-Derivate, oder zwei oder mehr OH-Gruppen aufweisende Verbindungen Q', z.B. ausgewählt aus 1,4-Dihydroxybenzol, 1,2-Dihydroxybenzol, 1,8-Dihydroxynaphtalin, 1,1'-Binaphtyl-2,2'-diol, 2,2'-Binaphtyl-1,1'-diol, Di- oder Polyolen wie z.B. Glykol oder Zuckern, wie z.B. Cyclodextrine, oder den in WO 03/078444 mit Formel VII bezeichneten Verbindungen oder zwei oder mehr Carbonsäuregruppen aufweisenden Verbindungen oder einer Verbindung, die eine oder mehrere OH-Gruppen aufweist und eine oder mehrere der Struktureinheiten T aufweisen können, eingesetzt werden, wobei die substituierten Verbindungen Substituenten, ausgewählt aus primären, sekundären oder tertiären Alkylgruppen, alicyclischen Gruppen, aromatischen Gruppen, -N(R⁵)₂, - NHR⁵, -NH₂, Fluor, Chlor, Brom, Jod, -CN, -C(O)-R⁵, -C(O)H oder -C(O)O-R⁵, -CF₃, -O-R⁵, - C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen. Die Substituenten sind wiederum vorzugsweise beschränkt auf solche, die keinen Einfluss auf die Reaktion selbst haben. Besonders bevorzugte Substituenten können ausgewählt sein aus den für R und L angegebenen bevorzugten Substituenten.

Es kann besonders vorteilhaft sein, wenn als zumindest eine Hydroxy-Gruppe aufweisende Verbindung eine Verbindung eingesetzt wird, die ursprünglich zumindest zwei Hydroxy-Gruppen aufweist und durch Umsetzung zumindest einer dieser Gruppen mit einer Verbindung der Formeln **0** und einer Verbindung der Formel **T'** oder einer aromatischen Verbindung, die zwei benachbarte Hydroxy-Gruppen am aromatischen Ring aufweist, erhalten wird. Auf diese Weise sind insbesondere die Verbindungen der Formeln **10** und **11** sowie spezielle Verbindungen der Formel **19,** bei denen X und Y kovalent (in einem aromatischen Ringsystem) verbunden sind, zugänglich.

Zur Herstellung von Verbindungen der Formel **1** wird bevorzugt jeweils die Phosphorverbindung zusammen mit einem oder mehreren basischen Ionenaustauscherharzen vorgelegt und anschließend die zumindest eine OH-Gruppe aufweisende Verbindung zudosiert. Auch die Vorlage der OH-Gruppe aufweisenden Verbindung zusammen mit dem Ionenaustauscher und das Zutropfen der Phosphorverbindung ist aber möglich.

Bei der Herstellung von asymmetrischen Diphosphorverbindungen der Formel **10, 11, 19, 20,** und **21** hat es sich als vorteilhaft erwiesen, wenn die OH-Gruppen aufweisende Verbindung zusammen mit einem oder mehreren basischen Ionenaustauscherharzen vorgelegt wird und anschließend eine oder mehrere Phosphorverbindungen zudosiert werden.

Bei der Herstellung von symmetrischen Diphosphorverbindungen der Formeln 10 und 11 kann entweder die OH-Gruppen aufweisende Verbindung oder die Phosphorverbindung gemeinsam mit dem Ionenaustauscher vorgelegt werden und entsprechend die andere Verbindung zudosiert werden.

Zur Herstellung der Verbindungen **19, 20** oder **21** kann es vorteilhaft sein, wenn zunächst eine Verbindung, ausgewählt aus den Verbindungen der nachfolgenden Formeln 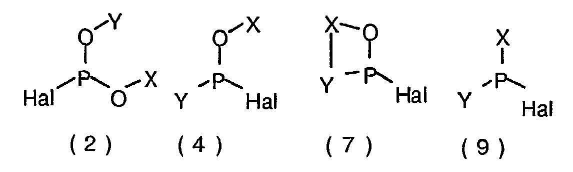 mit Hal gleich Halogenid, Y und X gleich substituierte oder unsubstituierte, aliphatische, alicyclische, aliphatisch-alicyclische, heterocyclische, aliphatisch-heterocyclische, aromatisch-aromatische oder aliphatisch-aromatische Kohlenwasserstoffreste mit 1 bis 50 Kohlenstoffatomen, wobei X und Y gleich oder unterschiedlich oder kovalent miteinander verknüpft sind, mit einer zumindest zwei Hydroxy-Gruppen aufweisenden Verbindung Q', vorzugsweise in Gegenwart eines basischen Ionenaustauschers, umgesetzt wird. Die substituierten Kohlenwasserstoffreste können einen oder mehrere Substituenten, ausgewählt aus primären, sekundären oder tertiären Alkylgruppen, alicyclischen Gruppen, aromatischen Gruppen, -N(R⁵)₂, -NHR⁵, -NH₂, Fluor, Chlor, Brom, Jod, - CN, -C(O)-R⁵, -C(O)H oder -C(O)O-R⁵, -CF₃, -O-R⁵, -C(O)N-R⁵, -OC(O)-R⁵ und/oder - Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen. Die Substituenten sind wiederum vorzugsweise beschränkt auf solche, die keinen Einfluss auf die Reaktion selbst haben. Besonders bevorzugte Substituenten für X und Y können ausgewählt sein aus den für R und L angegebenen bevorzugten Substituenten. Das aus dieser Umsetzung erhaltene Produkt, welches zumindest eine Hydroxy-Gruppe aufweist, wird entweder direkt mit einer Verbindung, die die Struktureinheit **T** (spezieller Typ der Verbindung **S**) aufweist, umgesetzt, bei welcher L gleich Hal ist oder zunächst mit einer Verbindung **0** und anschließend mit einer Verbindung **T'**. Bevorzugt werden alle diese Umsetzungen in dem erfindungsgemäßen Verfahren in Gegenwart eines basischen Ionenaustauschers durchgeführt.

Die Herstellung asymmetrischer Organophosphite und asymmetrischer Phosphonite gelingt nach K. Sasse in "Methoden der Organischen Chemie" (Houben-Weyl), Band XII/2, Kapitel 1, S. 62 ff., Thieme Verlag, Stuttgart (1964) und G. M. Kosolapoff, "Organophosphorus Compounds", chap. 7, XV, pp. 139, John Wiley, New York (1950) und den darin enthaltenen Literaturverweisen durch schrittweise Umsetzung der als Ausgangssubstanzen eingesetzten Organophosphorhalogenide bzw. Phosphorhalogenide mit Hydroxy-Gruppen enthaltenden Verbindungen in Gegenwart von Aminen. Je nach der gewünschten Zielverbindung kann das erfindungsgemäße Verfahren einen oder mehrere Reaktionsschritte beinhalten, wobei die Umsetzung jeweils einer Phosphor-Halogen-Bindung mit einer Hydroxy-Gruppe ein Reaktionsschritt ist. Entsprechend kann das erfindungsgemäße Verfahren als Mehrstufenprozess zur Herstellung asymmetrischer Organophosphite und asymmetrischer Phosphonite ausgeführt werden, wobei die Reaktionsschritte jeweils in Gegenwart eines (schwach) basischen Ionenaustauschers durchgeführt wird. Die generell möglichen Reaktionsschritte werden in den nachfolgenden Reaktionsschemata aufgeführt.

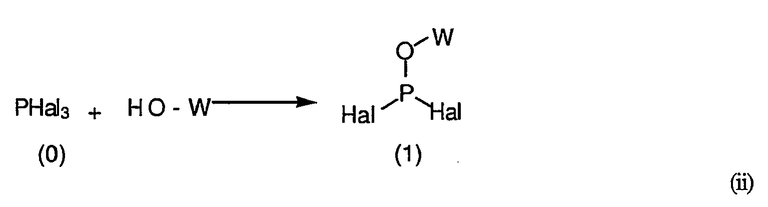

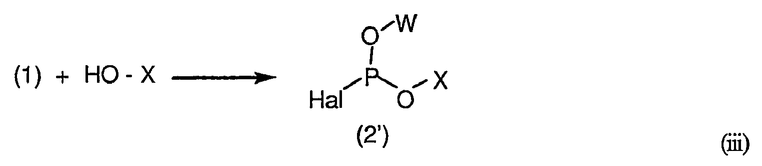

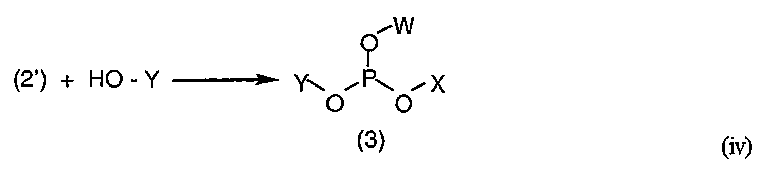

Wie in den Formeln **ii, iii** und **iv** illustriert, kann, ausgehend von einem Phosphortrihalogenid, durch Umsetzung mit einem Äquivalent einer, eine Hydroxy-Gruppe enthaltenden Verbindung HO-W ein Organophosphordihalogenid, durch Umsetzung des Organophosphordihalogenids mit einem weiteren Äquivalent einer, eine Hydroxy-Gruppen enthaltenden Verbindung HO-X ein Diorganophosphorhalogenid und durch weitere Umsetzung mit einem Äquivalent einer, eine Hydroxy-Gruppe enthalten Verbindung HO-Y schließlich ein asymmetrisches Triorganophosphit hergestellt werden. Bei der Herstellung asymmetrischer Phosphonite kann eine analoge Vorgehensweise gemäss den Formeln **v** und **vi** angewendet werden.

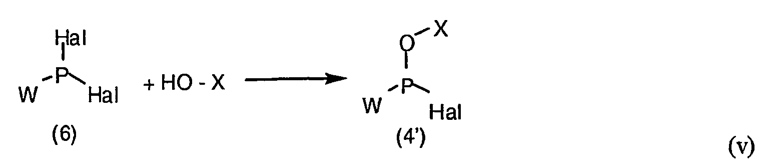

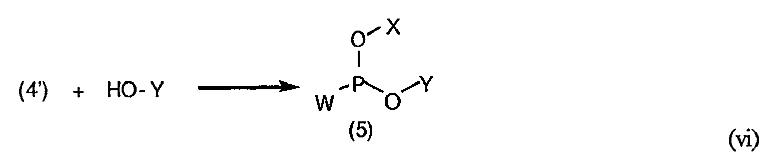

In den nachfolgenden Formeln **vii** und **viii** wird die erfindungsgemäße schrittweise Herstellung einer Diphosphor-Verbindung, die eine Struktureinheit **S** (abgebildet ist beispielhaft der Spezialfall der Struktureinheit **T**), am Beispiel eines Bisphosphits **10** gezeigt. Eine Dihydroxy-Verbindung **22** wird mit einem Äquivalent eines Halogendiorganophosphits **2** zur Verbindung **23** umgesetzt, die schließlich mit einer Verbindung **17,** welche die Struktureinheit **S** bzw. **T** aufweist, zum Bisphosphit **19** umgesetzt wird. Die genannten Halogendiorganophosphosphite können gleich oder verschieden sein, so dass symmetrische oder asymmetrische Bisphosphite erhalten werden.

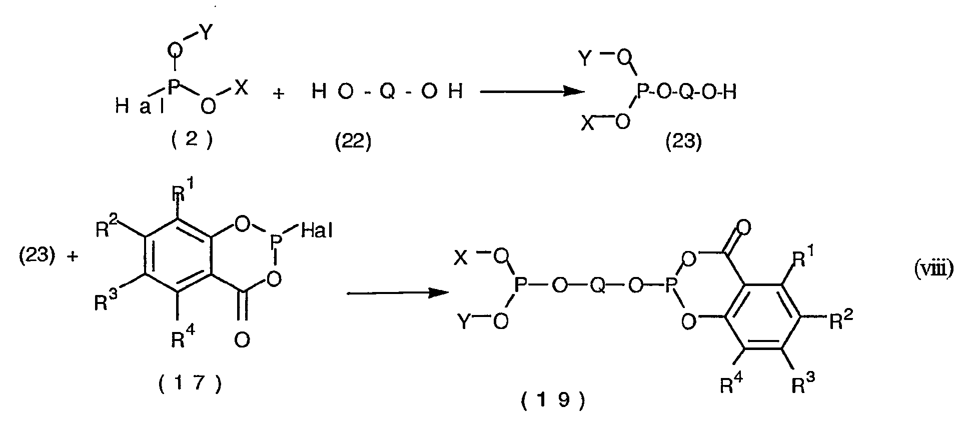

In den Formeln **ii** bis **viii** haben X, Y und **Q** die bereits weiter oben genannten Bedeutungen.

Gemäss der Formel **vii** können Dihydroxy-Verbindungen **22** mit Diorganophosphiten **2,** Halogendiorganophosphoniten **4** bzw. **7,** Halogenorganophosphiniten **9** umgesetzt werden. Im zweiten Reaktionsschritt **viii** können die gemäß **vii** erhaltenen Verbindungen mit einer die Struktureinheit S bzw. **T** aufweisenden Verbindung umgesetzt werden. In zwei Reaktionsschritten können so asymmetrische Diphosphor-Verbindungen der Formeln **19, 20** und **21** hergestellt werden. Die im Schritt **viii** eingesetzte Verbindung **17** (bicyclisches Phosphorchloridit) kann durch Reaktion (Kondensation) der Verbindung **S'** bzw. **T'** (einem 2-Hydroxybenzoesäurederivat) mit einer Verbindung **0** erhalten werden. Durch direkte Umsetzung von k Äquivalenten der Verbindung **17** mit einem Äquivalent einer Verbindung Q' können Verbindungen der Formel **10** oder **11** hergestellt werden, wobei k der Anzahl der OH-Gruppen in der Verbindung Q' entspricht und zur Herstellung der Verbindung **11** die Verbindung Q' eine Anzahl k an Säuregruppen aufweist. Wiederum bevorzugt ist die Durchführung aller Reaktionsschritte in Gegenwart eines basischen Ionentauschers.

Bei gleichen Organophosphorhalogeniden kann die Herstellung von symmetrischen Diphosphor-Verbindungen, wie z.B. speziellen Verbindungen der Formeln **10** und **11** selbstverständlich in einem Verfahrensschritt erfolgen. Wenn die Reaktivitäten zweier Organophosphorhalogenide gegenüber Dihydroxy-Verbindungen **22** hinreichend verschieden ist, kann die Herstellung asymmetrischer Diphosphor-Verbindungen ebenfalls in einem Verfahrensschritt durchgeführt werden. Andernfalls muss für jeden Reaktionsschritt ein Verfahrensschritt vorgesehen werden.

Analog zu den Reaktionen **vii** und **viii** können auch Verbindungen, die mehr als zwei Phosphor-Einheiten tragen, hergestellt werden, indem Verbindungen die drei oder mehr Hydroxy-Gruppen aufweisen schrittweise mit Organophosphorhalogeniden umgesetzt werden.

Wenn eine Verbindung, die noch eine oder mehrere Hydroxy-Gruppen beinhaltet, z.B. eine Verbindung der Struktur **24**

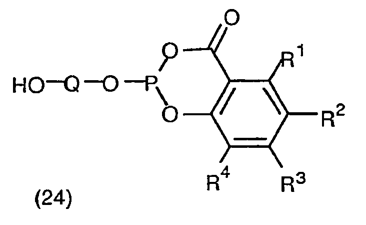

Ziel der Herstellung ist, kann die Reaktionssequenz nach der Umsetzung einer Verbindung der Formel **17** mit einer Verbindung der Formel **22** auf dieser Stufe abgebrochen werden. Eine vollständige Umsetzung der Hydroxy-Gruppen ist nicht notwendig.

Die in Reaktionsschemata **ii** bis **viii** illustrierten Reaktionsschritte können diskontinuierlich durchgeführt werden. Dabei wird eine Kupplungskomponente zusammen mit einem oder mehreren Ionentauscherharzen vorgelegt und anschließend die zweite Kupplungskomponente zudosiert. Über den Zulauf der Komponenten oder durch Zulauf von Lösemittel kann ggf. die Wärmeproduktionsrate bzw. die Temperatur in der Reaktionsmischung geregelt werden. Bei der diskontinuierlichen Fahrweise ist es für eine möglichst hohe Ausbeute an Wunschprodukt wichtig, die richtige Kupplungskomponente vorzulegen, bzw. zuzudosieren. Beispielsweise wird bei der gezielten Herstellung von asymmetrischen Organophosphor-Verbindungen der Formeln **1, 2, 3, 4, 5** oder **6** gemäss der Schemata **ii** bis **vi** bevorzugt die Phosphorverbindung, also das Phosphorhalogenid bzw. das Organophosphorhalogenid zusammen mit einem oder mehreren basischen Ionentauscherharzen vorgelegt und anschließend die OH-Gruppe aufweisende Verbindung (Hydroxy-Komponente) zudosiert. Bei der gezielten Herstellung asymmetrischer Diphosphor-Verbindungen gemäss der Schemata **vii** und **viii** wird bevorzugt die OH-Gruppen aufweisende Komponente zusammen mit einem oder mehreren Ionentauscherharzen vorgelegt und anschließend das Organophosphorhalogenid zudosiert.

Nach jedem Verfahrensschritt aber auch nach jedem Reaktionsschritt kann das Rohprodukt aufgearbeitet und im nächsten Reaktionsschritt weiter umgesetzt werden. Es kann aber auch vorteilhafter sein, nach der vollständigen Umsetzung einer Kupplungskomponente die nächste Komponente direkt zuzugeben und auf die Aufarbeitung zwischen beiden Reaktionsschritten zu verzichten. Im Sinne der vorliegenden Erfindung soll unter der Umsetzung jeweils einer Phosphor-Halogen-Bindung mit einer Hydroxy-Gruppe ein Reaktionsschritt verstanden werden.

Die Reaktionszeit in den einzelnen Reaktionsschritten kann gleich oder verschieden, in jedem Fall aber hinreichend lang sein, um den gewünschten Umsatz zu erzielen. Die Reaktionstemperaturen in den einzelnen Reaktionsschritten können gleich oder unterschiedlich sein. Der oder die in den einzelnen Reaktionsschritten eingesetzten basischen Ionentauscherharze können gleich oder unterschiedlich sein.

Als Reaktoren für eine diskontinuierliche Reaktionsführung können Rührkessel verwendet werden. Der bzw. die basischen Ionentauscherharze können dabei als frei bewegliche Perlen in der Reaktionsmischung eingesetzt werden. Es ist auch möglich den oder die Ionentauscherharze in Form von durch den Konvektionsstrom der Rührer angeströmten Packungen zusammenzufassen. Ein Einsatz von sogenannten "spinning basket"-Rührern ist ebenfalls möglich. Daneben können als Reaktorsystems Rohrreaktoren mit vollständiger Rückführung (Schlaufenreaktoren) eingesetzt werden. Die Ionentauscherharze-Schüttung kann dabei von oben oder unten angeströmt werden.

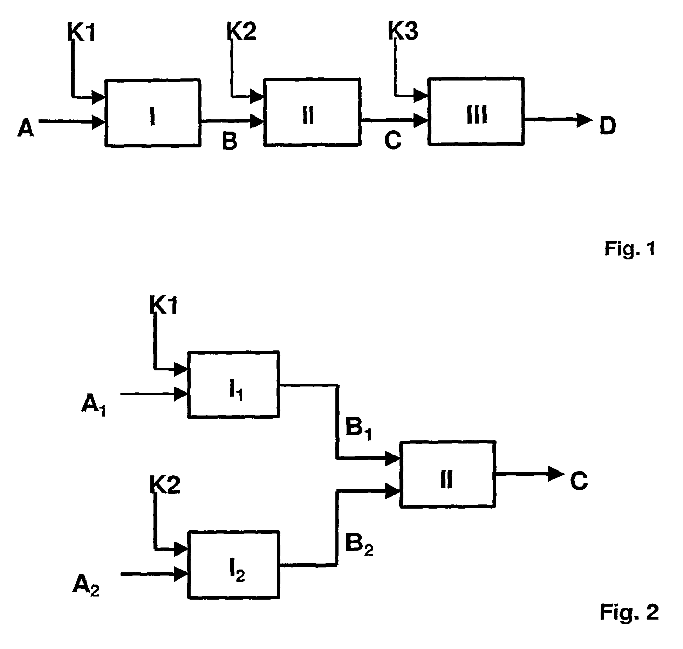

Die in den Schemata **ii** bis **viii** dargestellten Reaktionsschritte können in einer anderen bevorzugten Ausführungsart des erfindungsgemäßen Verfahrens auch kontinuierlich in hintereinander geschalteten Reaktionsräumen durchgeführt werden. Eine solche Reaktorsequenz ist in Fig. 1 illustriert: Das Edukt **A** und eine erste Kupplungskomponente **K1** werden in eine erste Reaktionsstufe **I** geführt. Der Austrag der ersten Reaktionsstufe **B** wird anschließend, wie auch eine zweite Kupplungskomponente **K2,** in eine zweite Reaktionsstufe **II** geführt usw. Es ist dabei auch möglich, dass die genannten Kupplungskomponenten **K** Austräge eines kontinuierlichen oder mehrerer kontinuierlicher, ggf. hintereinander geschalteter Reaktoren sind, also Reaktorsequenzen der in Fig. 2 skizzierten Art parallel und konvergierend verschaltet sind.

Um bei der Herstellung asymmetrischer Produkte eine möglichst hohe Ausbeute an Wunschprodukt zu erzielen, ist in jeder Stufe das Konzentrationsverhältnis der Reaktanden durch die Verhältnisse der jeweiligen Zuläufe entsprechend einzustellen. Typischerweise werden äquimolare oder annähernd äquimolare Mengen eingestellt. Bei der Herstellung von symmetrischen Diphosphiten, die eine Acylphosphiteinheit **(T)** oder eine Struktureinheit S aufweisen, hat es sich als vorteilhaft erwiesen, wenn das molare Verhältnis von Acylphosphorhalogenid-Verbindung zu Dihydroxyverbindung von 1 zu 1 bis 1,2 zu 1 eingestellt wird.

Die Verweilzeit der Reaktanden in den einzelnen Reaktionsschritten kann auch bei der kontinuierlichen Fahrweise gleich oder verschieden sein, in jedem Fall aber hinreichend, um den gewünschten Umsatz in der jeweiligen Stufe zu erzielen. Der oder die in den einzelnen Reaktionsschritten eingesetzten basischen Ionentauscherharze können gleich oder unterschiedlich sein.

Als Reaktoren für eine kontinuierliche Reaktionsführung können kontinuierlich betriebene Rührkessel eingesetzt werden. Der bzw. die basischen Ionentauscherharze können dabei als frei bewegliche Perlen in der Reaktionsmischung eingesetzt werden. Es ist auch möglich den oder die Ionentauscherharze in Form von durch den Konvektionsstrom der Rührer angeströmten Packungen zusammenzufassen. Ein Einsatz von sogenannten "spinning basket"-Rührern ist ebenfalls möglich. Daneben können Rohrreaktoren eingesetzt werden. Die Ionentauscherharz-Schüttung kann dabei von oben oder unten angeströmt werden. Bei den kontinuierlich betriebenen Reaktoren kann eine teilweise Rückführung der Reaktoraustrage vorteilhaft sein. Bei der Anordnung von kontinuierlichen Reaktoren in einer Reaktorskaskade kann der rückgeführte Anteil des Austrages einer Reaktionsstufe teilweise oder vollständig in dieselbe Stufe zurückgeführt, teilweise oder vollständig an der Anfang der vorhergehenden Stufe oder teilweise oder vollständig an den Anfang der ersten Stufe des ersten Reaktors der Reaktorkaskade geführt werden.

Ganz allgemein kann unabhängig davon, ob das Verfahren kontinuierlich oder diskontinuierlich durch geführt wird bei der Durchführung mehrerer Reaktionsschritte in den Reaktionsschritten gleiche oder unterschiedliche Ionenaustauscher eingesetzt werden. Ebenso können bei der Durchführung mehrerer Reaktionsschritte in den Reaktionsschritten gleiche oder unterschiedliche Temperaturen eingestellt werden. Die in den Reaktionsstufen gewählte Temperatur hängt im wesentlichen von der Reaktivität der Einsatzstoffe ab und kann innerhalb einer Folge von Reaktoren gleich oder unterschiedlich sein. Bevorzugt wird die Temperatur innerhalb einer Reaktorkaskade gesteigert. Die Reaktionstemperaturen betragen vorzugsweise von -50°C bis 150°C, bevorzugt von -10°C bis 120°C und besonders bevorzugt von 20°C bis 100°C. Wie bereits beschrieben kann die Temperatur durch die Zuffussregelung der Komponenten erfolgen. Ebenso ist es möglich die Temperatur durch die Verwendung von heiz-/kühlbaren Reaktoren auf einer bestimmten Temperatur zu halten. Auch die Kombination beider Maßnahmen zur Temperaturregulierung ist möglich. Auf diese Weise ist eine quasi isotherme Betriebsführung des gesamten Verfahrens oder einzelner Verfahrens- oder Reaktionsschritte möglich, wodurch eine besonders exakte Einstellung auf die optimale Reaktionstemperatur möglich ist, welches zu besseren Ausbeuten führen kann.

Das erfindungsgemäße Verfahren wird vorzugsweise in Gegenwart eines Lösemittels oder mehrerer Lösemittel durchgeführt. Die Wahl des Lösemittels hängt von der Löslichkeit der Einsatzstoffe ab. Darüber hinaus muss das Lösemittel unter den Reaktionsbedingungen weitgehend inert gegenüber der Einsatzstoffen sein. Das Lösemittel kann auch zur Temperaturregelung in das Reaktionsgemisch gegeben werden. Bevorzugt werden Lösemittel eingesetzt, die als Protonenträger fungieren können.

Bevorzugte Lösemittel sind beispielsweise Aromaten wie Benzol, Chlorbenzol, Toluol oder Xylole, offenkettige oder cyclische Alkane wie Pentan, n-Hexan, n-Heptan, Cyclohexan oder Methylcyclohexan, offenkettige oder cyclische Ether wie Diethylether, Di-iso-Propylether, Methyl-tert-Butylether, Anisol, Tetrahydrofuran, 1,4-Dioxan, 1,3-Dioxolan, Ester wie Ethylacetat, Isobutylacetat, tert-Butylacetat, cyclische Kohlensäureester wie Ethylencarbonat, Propylencarbonat und 1,2-Butylencarbonat, Ketone wie Aceton, 2-Butanon, 3,3-Dimethyl-2-butanon, aromatische und aliphatische Nitrile wie Benzonitril, Proprionitril und Acetonitril, Lactone, Pyrrolidone, z.B. N-Methylpyrrolidon, Formamide, z.B. Dimethylformamid, Sulfoxide, z.B. Dimethylsulfoxid sowie N-Alkyl-Morpholine, Pyrridine, Chinoline, Stickstoffbasen wie Amine und Sulfolan. Es ist selbstverständlich auch möglich, Gemische dieser Lösemittel einzusetzen.

In einer besonders bevorzugten Ausführungsart des erfindungsgemäßen Verfahrens wird das Verfahren in Gegenwart eines Protonenüberträgers durchgeführt wird, der vorzugsweise homogen in der Reaktionsmischung oder Reaktionslösung vorhanden ist. Als Protonenüberträger können Basen eingesetzt werden, die schwächere Basen als die schwach basischen Ionenaustauscher sind. Bevorzugt werden als Protonenüberträger solche Verbindungen eingesetzt, die neben der Funktion als Protonenüberträger auch die Funktion des Lösungsmittels übernehmen können. Solche Verbindungen können z.B. N-Methylpyrrolidon oder Methylimidazol sein. Durch die Verwendung eines Protonenüberträgers, der homogen in der Reaktionsmischung verteilt ist, kann die Reaktionsgeschwindigkeit erhöht werden, da zur Unterstützung der Reaktion die Reaktanden nicht mehr direkt mit dem Ionenaustauscher in Kontakt kommen müssen, sondern nur mit der schwächeren Base, die aber homogen verteilt in der Reaktionsmischung vorliegt. Der Protonenüberträger reagiert dann mit dem Ionenaustauscher weiter, dient als nur als Überträger. Vorzugsweise liegt in der Reaktionsmischung ein molares Verhältnis von Protonenüberträger zu durch den Ionenaustauscher bereitgestellter freier Base von 0,0001 zu 1 bis 1 zu 1, bevorzugt von 0,001 bis 0,01 vor.

Bevorzugt wird das erfindungsgemäße Verfahren in Gegenwart von einem oder mehreren polymeren, (schwach) basischen Ionenaustauscherharzen, vorzugsweise auf Basis von Styrol-Divinylbenzol-Copolymeren, durchgeführt, um den bei der Kondensation von Phosphortrihalogeniden oder Organophosphorhalogeniden mit organischen, Hydroxy-Gruppen tragenden Verbindungen entstehenden Halogenwasserstoff abzufangen. Besonders bevorzugt werden Ionentauscherharze auf Basis von Styrol-Divinylbenzol-Copolymeren, die N,N-Diakyl-Amin-Gruppen, beispielsweise N,N-Dimethylamino-Gruppen tragen, eingesetzt. Es können macroreticulare Ionentauscherharze oder solche vom Gel-Typ verwendet werden. Macroreticulare Ionentauscherharze sind besonders bevorzugt.

Gut geeignet für den Einsatz im erfindungsgemäßen Verfahren sind kommerziell erhältliche (schwach) basische Ionentauscherharze, beispielsweise Lewatit MP62, DOWEX M-43 oder Amberlyst A21.

Vorzugsweise wird der Ionenaustauscher in Form von Partikeln, bevorzugt mit einer mittleren Partikelgröße von 10 µm bis 2 mm, besonders bevorzugt von 0,1 bis 1,5 mm oder in Form einer festen Packung eingesetzt. Auf diese Weise ist gewährleistet, dass der Ionenaustauscher sehr einfach aus dem Reaktionsgemisch entfernt bzw. von diesem abgetrennt werden kann.

In dem erfindungsgemäßen Verfahren wird zumindest soviel (schwach) basischer Ionenaustauscher eingesetzt, dass für jedes Mol Säure, welches bei der oder den Verbindungsbildung/-en abgespalten wird, zumindest ein Mol freier Base am Ionentauscher zur Verfügung steht. Vorzugsweise wird soviel Ionenaustauscher eingesetzt, dass das Verhältnis von Molen durch die Abspaltung entstehender Säure zu Molen vom Ionenaustauscher zur Verfügung gestellter freier Base von 1 zu 1 bis 3 zu 1, vorzugsweise von 1,1 zu 1 bis 2 zu 1.

Das Ionentauscherharz wird vorzugsweise vor dem Einsatz im erfindungsgemäßen Verfahren mit bekannten Techniken getrocknet. Beispielsweise durch Wärmebehandlung im Vakuum (G. Mohorcic, M. Pregelj, M. Pirs, Ion Exchange and Membranes (1975), 2(2), 107 - 110, C. Buttersack, K. Struss, H. Widdecke, J. Klein, Reactive Polymers, Ion Exchangers, Sorbents (1987), 5(2), 171 - 180) oder durch azeotrope Destillation mit geeigneten Schleppmitteln (GB 1120402).

Zur Durchführung des Verfahrens in kontinuierlicher bzw. quasi kontinuierlicher Fahrweise werden pro Reaktions- bzw. Verfahrensschritt zumindest zwei parallel geschaltete Reaktoren vorgesehen, die so verschaltet sind, dass wenn in einem der Reaktoren der Ionenaustauscher gewechselt, regeneriert oder getrocknet wird, die Reaktion in dem anderen Reaktor fortgesetzt werden kann.

Um die Kosten des Verfahrens gering zu halten, ist es zweckmäßig, das mit Halogenwasserstoff beladene Ionenaustauscherharz zu regenerieren (in die basische Form zu bringen) und wiederzuverwenden.

Schwach basische Ionentauscher werden üblicherweise mit NH₄OH, Na₂CO₃ oder NaOH regeneriert. Genaue Instruktionen hierzu liefern Technische Informationsblätter des Herstellers (z.B. Lewatit-Selective ion exchangers, Instructions for laboratory trials with Lewatit selective ion exchange resins, Technical Information, Bayer; Dow Liquid Separations, Dowex Marathon WBA, Ion Exchange Resin, Engeneering Information, The Dow Chemical Company; Dowex Ion Exchange Resins, Properties, Impurities and Concentrations of Regenerant Chemicals). Weitere Informationen zur Regenerierung von Ionentauschern können z. B. den nachfolgenden Literaturstellen entnommen werden: Regeneration of Anion Exchange Resins with Regular-Grade Diaphragm-Cell Caustic Soda: A Five-Year Plant Trial (IWC Proceedings, 10(88, S.D. Coker, M.P. Murphy); Petrochemical Company Anion Exchange Resin Regeneration Trial (Dow Report, 8/89, Michael A. Smith) und Caustic Soda for Ion Exchange Resin Regeneration (Marketing Research Report, 4/86, Ralph A. Bacon).

Die vorliegende Erfindung wird an Hand der Figuren Fig. 1 und Fig. 2 näher erläutert, ohne dass die Erfindung, deren Anwendungsbreite sich aus der Beschreibung und den Patentansprüchen ergibt, auf diese Ausführungsformen beschränkt sein soll.

In Fig. 1 ist eine mögliche Verschaltung von Reaktoren für eine kontinuierliche Fahrweise dargestellt. Das Verfahren gemäß Fig. 1 weist drei Reaktionsschritte auf. Im ersten Schritt wird ein Edukt **A,** z.B. ein Phosphorhrichlorid, in einen Reaktor **I,** der einen Ionenaustauscher aufweist, eingespeist. In diesen Reaktor wird ebenfalls Komponente **K1,** welche eine erste eine OH-Gruppe aufweisende Verbindung ist, zudosiert. Die Menge der Komponente K1 ist dabei vorzugsweise so bemessen, dass ein Verhältnis von **A** zu **K1** von 3 zu 1 vorliegt. Das als Produkt **B** des ersten Reaktionsschrittes I erhaltene Monoorganophosphordichlorid wird in den Reaktor **II** des nächsten Reaktionsschrittes überführt, der ebenfalls einen Ionenaustauscher aufweist. In diesen Reaktor wird außerdem die Komponente **K2,** welche eine zweite eine OH-Gruppe aufweisende Verbindung ist, zudosiert. Die Menge der Komponente **K2** ist dabei vorzugsweise so bemessen, dass ein molares Verhältnis von **B** zu **K2** von 2 zu 1 bei Eintritt in den Reaktor vorliegt. Das als Produkt **C** des zweiten Reaktionsschrittes **II** erhaltene Diorganophosphorchlorid wird in den Reaktor **III** des nächsten Reaktionsschrittes überführt, der ebenfalls einen basischen Ionenaustauscher aufweist. In diesen Reaktor wird außerdem die Komponente **K3,** welche eine dritte eine OH-Gruppe aufweisende Verbindung ist, z. B. einer Verbindung gemäß Formel **24,** zudosiert Die Menge der Komponente **K3** ist dabei vorzugsweise wiederum so bemessen, dass ein Verhältnis von **C** zu **K3** von 1 zu 1 bei Eintritt in den Reaktor vorliegt. Als Produkt **D** aus Reaktor **III** wird im vorliegenden Fall ein Phosphit erhalten, welches eine Struktureinheit **T** aufweist.

In Fig. 2 ist eine andere mögliche Verschaltung von Reaktoren in denen eine Verfahrensvariante des erfindungsgemäßen Verfahrens, welche mehrere Reaktionsschritte aufweist, kontinuierlich durchgeführt werden kann. So kann in Reaktor **I₁,** der einen Ionenaustauscher aufweist, als Edukt **A₁** z.B. ein Halogendiorganophosphit gemäß Formel **2** zusammen mit der Komponente **K1,** z.B. eine Dihydroxy-Verbindung gemäß Formel **22** im Verhältnis von 1 zu 1 eingespeist werden. Als Reaktionsprodukt **B₁** wird ein Produkt gemäß Formel **23** erhalten. In Reaktor **I₂,** der ebenfalls einen Ionenaustauscher aufweist, wird als Edukt **A₂** z.B. eine Verbindung gemäß Formel **0** zusammen mit der Komponente **K2,** z.B. einem 2-Hydroxybenzoesäurederivat **T'** im Verhältnis von 1 zu 1 eingespeist. Als Reaktionsprodukt **B₂** wird ein Produkt gemäß Formel **17** erhalten. Die Produkte **B**₁ und **B₂** werden gemeinsam, vorzugsweise im molaren Verhältnis von 1 zu 1 in den Reaktor **II,** der ebenfalls einen basischen Ionenaustauscher aufweist, gefahren. In diesem Reaktor reagieren die Produkte **B₁** und **B₂** unter Chlorwasserstoff-Abspaltung zu Produkt **C** gemäß Formel **19.**

Die folgenden Beispiele sollen ausschließlich der Erläuterung der Erfindung dienen, nicht jedoch ihre Anwendungsbreite einschränken, die sich ausschließlich aus der Beschreibung und den Patentansprüchen ergibt.

### Beispiele:

Alle Präparationen wurden mit Standard-Schlenk-Technik unter Schutzgas durchgeführt. Die Lösungsmittel wurden vor Gebrauch über geeigneten Trocknungsmitteln getrocknet. Der eingesetzte Ionentauscher Lewatit MP-62 wurde zur Entfernung von Wasser in Hexan suspendiert und das Wasser azeotrop in einer Dean-Stark-Apparatur ausgetragen.

### Beispiel 1: Herstellung von 3-Chlor-2,4-dioxa-3-phospha-phenanthren-1-on bzw. 2-Chloro-4H-Naphtho[1,2-d]-1,3,2-dioxaphosphorin-4-on gemäß Formel I

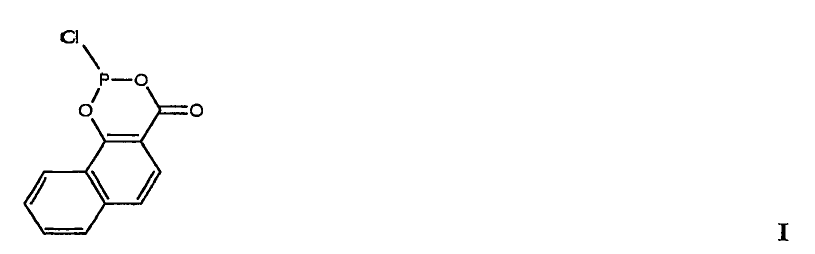

### Beispiel 1.1: erfindungsgemäß unter Verwendung eines Ionenaustauschers

Eine Mischung von 9,5 g (0,05 mol) 1-Hydroxy-2-naphthoesäure und 58 g (ca. 0,1 mol) Ionenaustauscher Lewatit MP 62 und 250 ml Toluol wird 30 min. lang kräftig gerührt, wobei die Säure langsam gelöst wird. Anschließend wurde bei Raumtemperatur eine Lösung von 4,4 ml = 6,9 g (0,05 mol) Phosphortrichlorid in 30 ml Toluol hinzugetropft, wobei eine gelinde Wärmeentwicklung stattfand. Zur Aufarbeitung wurde die Lösung vom Ionenaustauscher abdekantiert, der Rückstand 2 mal mit ca. 80 ml getrocknetem Toluol nachgewaschen und das Lösungsmittel (Toluol) im Ölpumpenvakuum entfernt. Als Produkt wurde ein farbloser Feststoff enthalten. Die Ausbeute beträgt 75% der Theorie.

### Beispiel 1.2: Vergleichsbeispiel, Umsetzung in Gegenwart von Triethylamin.

Zu einer Suspension von 18,82 g (0,1 mol) 1-Hydroxy-2-naphthoesäure in 200 ml Toluol wurde bei 0°C eine Lösung von 42,2 ml (30,7 g; 0,3 mol) Triethylamin und 8,8 ml (13,9 g; 0,1 mol) Phosphortrichlorid in 30 ml Toluol langsam zugetropft und anschließend gerührt. Es bildete sich ein farbloser Niederschlag (Aminhydrochlorid), der das Rühren erschwert und anschließend unmöglich macht. Auch durch Zugabe von 100 ml getrocknetem Toluol konnte die Suspension nicht wieder rührbar gemacht werden. Anschließend erwärmte man die Reaktionsmischung auf Raumtemperatur und ließ über Nacht reagieren. Danach wurde der farblose Feststoff abfiltriert und 2 x mit 100 ml Toluol nachgewaschen. Die erhaltene klare Lösung wurde im Ölpumpenvakuum von flüchtigen Bestandteilen befreit, wobei ein öliger Rückstand anfiel. Das Rohprodukt wird wieder in Toluol gelöst, wobei die Ausfällung eines farblosen Feststoffs beobachtet wird. Nach nochmaliger Filtration werden 18,6 g eines farblosen Feststoffs erhalten. Ausbeute: 74,35%.

Mit dem erfindungsgemäßen Verfahren kann bei gleicher Ausbeute auf eine aufwändige Abtrennung der Base verzichtet werden. Zudem gelingt mit dem erfindungsgemäßen Verfahren die Abtrennung der Base quantitativ, so dass im Produkt keine Spuren der Base vorhanden sind, welche Nachfolgereaktionen stören könnten.

### Beispiel 2: Herstellung von 2-chlor-2,3-dioxa-2-phosphanaphthalin-4-on Formel II

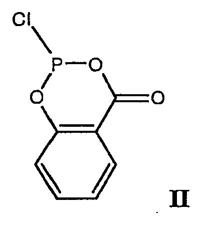

### Beispiel 2.1: erfindungsgemäß unter Verwendung eines Ionenaustauschers

Zu einem Gemisch von 1.38 g (0.01 mol) Salicylsäure und 11.7 g MP62 Lewatit in 20ml Toluol werden bei Raumtemperatur 1,375 g (0.01 mol) Phosphortrichlorid tropfenweise hinzugegeben. Die Reaktionsmischung wird 15 min gerührt. Eine GC/MS-Untersuchung der Reaktionslösung ergibt vollständige Umsetzung der Salicylsäure, wobei das gewünschte Produkt mit 100% Selektivität entsteht.

### Beispiel 2.2: Vergleichsbeispiel mit Triethylamin

In einem Vergleichsversuch gemäß Beispiel 2.1, in dem Triethylamin 0,02 mol an Stelle von Ionenaustauscher als Base eingesetzt wurde, wurde bei der Umsetzung unter Raumtemperatur-Bedingungen lediglich 37% Produktbildung beobachtet. Darüber hinaus entstanden noch drei weitere, nicht näher identifizierte Produkte.

### Stand der Technik:

In **Reaction product of phosphorus trichloride with salicylic acid;** Cade, J. A.; Gerrard, W. Chemistry & Industry 1954, 402 wird die Herstellung von 2-Chloro-4H-1,3,2-benzodioxaphosphorin-4-on mit einer Ausbeute von 85 % beschrieben, wobei 1 mol PCl₃, 1 mol Salicylsäure und 1 mol Pyridin in Diethylether bei -10 °C umgesetzt werden.

In **An examination of the reaction between phosphorus trichloride and salicylic acid.** Young, Richard W., Journal of the American Chemical Society 1952, 74, 1672-3, werden 138 g Salicylsäure, 150 g PCl₃ und 150 ml Toluol 3 h unter Reflux gekocht, anschließend das Toluol und PCl₃ im Vakuum entfernt und der Rückstand destilliert. Es wurden 120 g 2-chloro-5,6-benzo-1,3,2-dioxaphosphorin-4-on erhalten, was einer Ausbeute von 59 % entspricht.

Es ist leicht zu erkennen, dass der Einsatz des schwach basischen Ionenaustauschers als Base eine Selektivität von 100 % ermöglicht, was durch keines der anderen Verfahren ermöglicht wird.

### Beispiel 3: Phosphit gemäß Formel III, hergestellt aus 2,2'-Bis(6-tert-butyl-1-hydroxy-4-methoxyphenyl) und Phosphortrichlorid

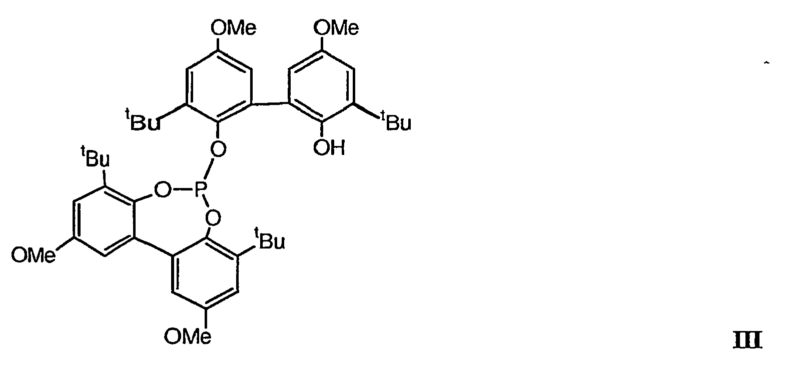

### Beispiel 3.1: erfindungsgemäß

Zu einer Mischung aus 26,5 g (0,045 mol eq.) Ionenaustauscher Lewatit MP-62 und 1,3 ml (2 g; 0,015 mol) Phosphortrichlorid in 200 ml Toluol wird unter kräftigem Rühren bei Raumtemperatur eine Lösung von 12,3 g (0,03 mol) 2,2'-Bis(6-tert.-butyl-1-hydroxy-4-methoxyphenyl) in 100 ml Toluol zugetropft. Anschließend wurde die Reabtionsmischung 2 h auf 60 °C erwärmt und über Nacht abgekühlt. Zur Aufarbeitung wurde der Ionenaustauscher mittels Glasfritte abfiltriert und 4 mal mit 50 ml Toluol nachgewaschen. Die Lösung wurde bei Raumtemperatur im Ölpumpenvakuum von flüchtigen Bestandteilen befreit und das Produkt im Vakuum getrocknet. Ausbeute: 11,8 g, entsprechend 93 % der Theorie.

### Beispiel 3.2: Stand der Technik gemäß EP 1201675

Zu einer Lösung von 2,42 g 2,2'-Bis(6-tert.-butyl-1-hydroxy-4-methoxyphenyl)(6,75 mmol) und 1,6 ml Pyridin in 22 ml THF tropft man bei 0°C eine Lösung von 0,93 g PCl₃ (6,75 mmol) in 10 ml THF. Nach 4 h Rühren bei 25°C wird das Lösungsmittel im Vakuum entfernt. Nach Zusatz von 40 ml Diethylether, Filtration und einengen im Vakuum werden 2,8 g (98%) and spektroskopisch reinem Chloro-phosphorigsäureester des 2,2'-Bis(6-tert.-butyl-1-hydroxy-4-methoxyphenyl) erhalten. 2,8 g dieses Chloroesters (6,62 mmol) in 20 ml THF gibt man bei Raumtemperatur zu einer bei 20°C erhaltenen Monolithiumphenolatlösung aus 2,37 g 2,2'-Bis(6-tert.-butyl-1-hydroxy-4-methoxyphenyl)(6,62 mmol) in 30 ml THF und 20,7 ml einer 0,32 M Hexanlösung von n-Butyllithium (6,62 mmol). Nach 24 h wird im Vakuum eingeengt. Zugabe von 40 ml Methylenchlorid, Filtration und Entfernen des Solvens im Vakuum ergeben 4,6 g (93 %) an hochviskosem Produkt.

### Einsatz von Triethylamin wie im Stand der Technik (EP 0 213 639) beschrieben.

Ca. 179,2 g (0,5 mol) 2,2'-Dihydroxy-3,3'-di-t-butyl-5,5'-dimethoxy-1,1'-biphenyl-diol wird zu ca. 1600 ml Toluol gegeben. Ausreichend Toluol wurde dann azeotropisch entfernt, um Reste von Feuchtigkeit zu entfernen. Die Diol-Toluol-Lösung wurde dann auf 80°C abgekühlt und ca. 168,7 g (1,67 mol) Triethylamin wurden zugegeben. Ca. 68,7 g (0,5 mol) PCl₃ wurden zu 200 ml Toluol gegeben. Zu dieser Lösung wurde bei -10 °C innerhalb von 1 h und 40 min tropfenweise die Diol-Toluol-Lösung hinzugefügt. Die Reaktionslösung wurde für weitere 30 min. bei dieser Temperatur gehalten. Anschließen wurde ein Aufwärmen der Lösung auf Raumtemperatur innerhalb von 2 h zugelassen. Anschließend wurde das Reaktionsgemisch zur Entfernung des Triethylaminhydruchlorid Niederschlags filtriert und der Niederschlag mit zwei mal 200 ml Toluol gewaschen. Das Filtrat und die Waschlauge wurden vereinigt zu 717,5 g Lösung des Phosphorochloridit-Zwischenproduktes in Toluol.

Ca. 170 g von weiterem 2,2'-Dihydroxy-3, 3'-di-t-butyl-5,5'-dimethoxy-1,1'-biphenyl-diol wurde zu 800 ml Toluol gegeben. Anschließend wurden 48,1 g Triethylamin hinzugefügt. Die 717,5 g der oben genannten Phosphorochloridit-Toluol-Lösung wurde dieser Lösung innerhalb von 45 min bei Raumtemperatur zugefügt. Die Temperatur wurde auf 80 °C für eine Stunde und 45 Minuten und dann auf 95 °C für 2 Stunden erhöht. Anschließend ließ man auf Raumtemperatur abkühlen. Ca. 600 ml destilliertes Wasser wurden der Reaktionsmischung zugegeben um, das feste Triethylaminhydrochlorid zu lösen. Nachdem der Lösung Zeit gegeben wurde sich zu setzen, wurden die sich ausbildenden Phasen getrennt. Die wässrige Phase wurde mit zweimal 250 ml Toluol extrahiert. Die organische Phase und die Extrakte wurden vereinigt und über trockenem Magnesiumsulfat für eine Stunde getrocknet. Anschließend wurde die Lösung filtriert und im Vakuum aufkonzentriert zu einem festen Rückstand. Der Rückstand wurde aus Acetonitil rekristallisiert und es wurden 242,5 g (65,4 % der Theorie) des Diorganophosphits erhalten.

Wie an Hand des erfindungsgemäßen Beispiels zu erkennen ist, kann die gleiche Ausbeute wie nach dem Verfahren gemäß dem Stand der Technik erhalten werden, wobei die Verfahrensführung deutlich einfacher ist

### Beispiel 4: Herstellung eines Biphosphits der Formel IV

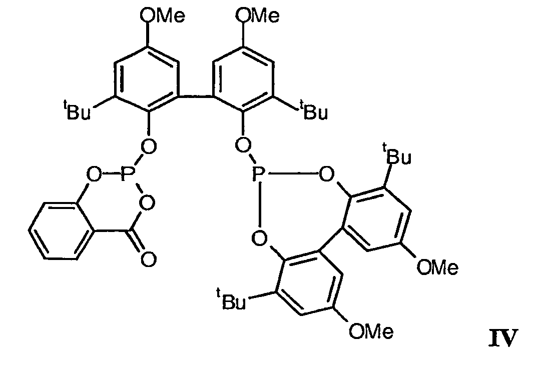

### Beispiel 4.1: erfindungsgemäße

Zu einer Mischung von 32,4 g (0,055 mol) Ionenaustauscher MP-62 und 18,6 g (0,025 mol) 2-[(3,3'-di-tert-butyl-5,5'-dimethoxy-1,1'-biphenyl-2,2'-diyl)phosphit]-2'-Hydroxy-5,5'-dimethoxy-1,1'-biphenyl (**Formel III**) in 200 mL Toluol wurde tropfenweise eine Lösung von 6,09 g (0,03 mol) 2-Chlor-4H-1,3,2-benzodioxaphosphorin-4-on in 50 ml Toluol zugegeben. Anschließend wurde die Reaktionsmischung 3 h bei 60 °C gerührt. Zur Aufarbeitung wurde der Ionenaustauscher abfiltriert, Toluol im Vakuum entfernt und der Rückstand aus Acetonitril umkristallisiert. Die Ausbeute betrug 61 % bei einer Reinheit von größer 98 %.

### Beispiel 4.2: Stand der Technik gemäß EP 1 201 675

### Herstellung der Verbindung gemäß Formel III

Zu einer Lösung von 2,42 g 2,2'-Bis(6-*tert*.-butyl-1-hydroxy-4-methoxyphenyl) (6,75 mmol) und 1,6 ml Pyridin in 22 ml THF tropft man bei 0 °C eine Lösung von 0,93 g PCl₃ (6,75 mmol) in 10 ml THF. Nach 4 h Rühren bei 25 °C wird das Lösungsmittel im Vakuum entfernt. Nach Zusatz von 40 ml Diethylether, Filtration und Einengen im Vakuum werden 2,8 g (98 %) an spektroskopisch reinem Chlorophosphorigsäureester des 2,2'-Bis(6-*tert*.-butyl-1-hydroxy-4-methoxyphenyl) erhalten: ³¹P-NMR (CD₂Cl₂) δ 172.7 ppm. 2,8 g dieses Chloroesters (6.62 mmol) in 20 ml THF gibt man bei Raumtemperatur zu einer bei -20 °C erhaltenen Monolithiumphenolatlösung aus 2,37 g 2,2'-Bis(6-*tert*.-butyl-1-hydroxy-4-methoxyphenyl) (6.62 mmol) in 30 ml THF und 20.7 ml einer 0.32 *M* Hexanlösung von n-Butyllithium (6.62 mmol). Nach 24 h wird im Vakuum eingeengt. Zugabe von 40 ml Methylenchlorid, Filtration und Entfernen des Solvens im Vakuum ergeben 4.6 g (93 %) an hochviskosem Produkt.
Analyse (ber. für C₄₄H₅₇OₛP = 744.9 g/ Mol) C 70.35 (70.95); H 7.86 (7.71). ³¹P-NMR (CD₂Cl₂) δ 140.7 ppm. ¹H-NMR (CD₂Cl₂) δ 1.43 (s, 9 H); 1.56 (s, 9 H); 1.63 (s, 9 H); 1.67 (s, 9 H); 4.01 (s, 3 H);4.03 (s, 6 H); 4.05 (s, 3 H); 5.42 (s, 1 H); 6.7...7.3 (m, 8 H) ppm. FAB MS: *m*/*e 745* (37%, *M*⁺); 387 (100 %, *M*⁺- 2,2'-Bis(6-*tert*.-butyl-1-hydroxy-4-methoxyphenyl)). IR (CHCl₃, 0.1 mm CaF₂), ν (OH) = 3549 cm⁻¹.

### Herstellung der Verbindung gemäß Formel IV

Zu einer Lösung von 2,27 g der Verbindung gemäß Formel **III** (9,19 mmol) in 72,5 ml THF wurden bei -20 °C unter Rühren innerhalb von 10 min 28,7 ml einer 0,32 molaren Lösung von n-Butyllithium (3,04 mmol) getropft. Nach Erwärmen auf Raumtemperatur wird zunächst 30 min nachgerührt, und die erhaltene Mischung dann zu 66,5 ml einer 0,138 molaren Lösung von 2-Chlor-1.3-dioxa-2-phosphanaphthalin-4-on (3,04 mmol) (Formel **II** hergestellt gemäß Beispiel 2) in THF gegeben. Man rührte die Reaktionsmischung 4 h bei 25 °C, entfernte das Lösungsmittel im Vakuum und verrührt den sirupösen Rückstand 2 h mit 60 ml Hexan. Es wurde filtriert, mit 2 mal 7 ml Hexan gewaschen und der Filterkuchen mit heißem Hexan und mit Diethylether extrahiert. Nach Reduzierung der Lösungsmittelmenge auf ein Drittel und anschließender Lagerung der Lösung bei -20 °C erhält man das Produkt in 54% Ausbeute. ³¹P-NMR (CD₂Cl₂): 119.2 (m); 119.8 (m); 139.5 (m); 140.1 (m); ¹H-NMR (CD₂Cl₂): 1.02..1.26 (36 H); 3.67..3.74 (12 H); 6.43..7.99 (12 H). FAB-MS: m/e 911 (100%, M+), 744 (18%), 387 (13%).

Wie an Hand des Beispiels 4 gut zu erkennen ist, werden mit dem erfindungsgemäßen Verfahren deutlich bessere Ausbeuten erzielt.

## Patentansprüche

1. Verfahren zur Herstellung von dreiwertigen Organophosphor-Verbindungen, die zumindest eine Struktureinheit S 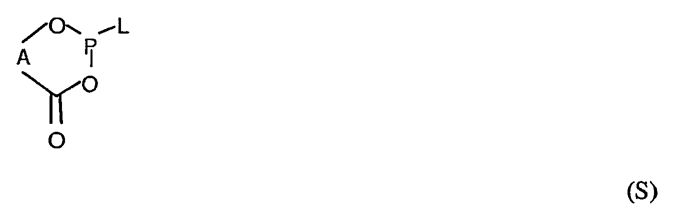 wobei A ein zweibindiger substituierter oder unsubstituierter Alkyl- oder Arylrest, der ein Ringsystem gemäß Struktureinheit S bilden kann, aufweist, der Rest L ein über ein Sauerstoff- oder Kohlenstoffatom an das Phosphoratom gebundener organischer Rest oder ein Halogenid ist, durch Kondensation von Phosphorverbindungen der Formel i
PHalₐR₍₃₋ₐ₎ (i)
wobei Hal gleich Halogenid, ausgewählt aus Chlor, Brom und Iod, wobei die Halogenide gleich oder unterschiedlich sein können, R gleich über ein Kohlenstoff oder Sauerstoff-Atom an das Phosphor gebundener organischer Rest und a = 2 oder 3 bedeuten,
mit einer organischen Verbindung der Formel **S'** 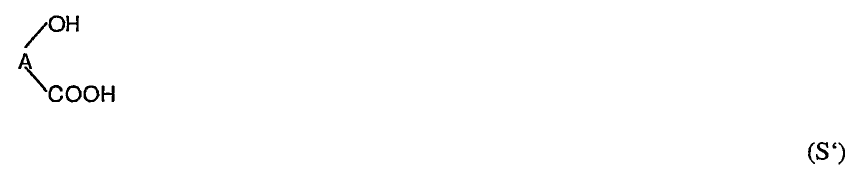 wobei A die für die Struktureinheit S genannte Bedeutung hat,
**dadurch gekennzeichnet,**
**dass** die Umsetzung in Gegenwart zumindest eines basischen Ionenaustauscherharzes durchgeführt wird.

2. Verfahren gemäß Anspruch 1,
**dadurch gekennzeichnet,**
**dass** zur Herstellung von dreiwertigen Organophosphor-Verbindungen, die zumindest eine Struktgureinheit **T** 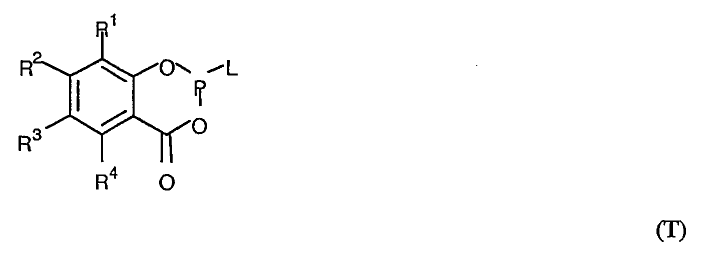 wobei R¹, R², R³, und R⁴ jeweils unabhängig voneinander ausgewählt sind aus einwertigen substituierten oder unsubstituierten aliphatischen, alicyclischen, aromatischen, heteroaromatischen, gemischt aliphatisch-alicyclischen, gemischt aliphatisch-aromatischen, heterocyclischen, gemischt aliphatisch-heterocyclischen Kohlenwasserstoffresten mit 1 bis 50 Kohlenstoffatomen, H, F, Cl, Br, I, -CF₃, -CH₂(CF₂)ⱼCF₃ mit j = 0 - 9, -OR⁹, -COR⁹, -CO₂R⁹, -CO₂M, -SR⁹, -SO₂R⁹, -SOR⁹, -SO₃R⁹, -SO₃M, -SO₂NR⁹R¹⁰, -NR⁹R¹⁰, -N=CR⁹R¹⁰, wobei R⁹ und R¹⁰ unabhängig voneinander aus H, einwertigen substituierten oder unsubstituierten aliphatischen und aromatischen Kohlenwasserstoffresten mit 1 bis 25 Kohlenstoffatomen ausgewählt sind und M ein Alkalimetall-, formal ein halbes Erdalkalimetall-, Ammonium- oder Phosphoniumion ist, oder benachbarte Reste R¹ bis R⁴ zusammen ein kondensiertes substituiertes oder unsubstituiertes aromatisches, heteroaromatisches, aliphatisches, gemischt aromatisch-aliphatisches oder gemischt heteroaromatisch-aliphatisches Ringsystem ausbildet; wobei die substituierten Kohlenwasserstoffreste als Substituenten solche, ausgewählt aus -N(R⁵)₂, -NHR⁵, -NH₂, Fluor, Chlor, Brom, Jod, -OH, -CN, -C(O)-R⁵, -C(O)H oder -C(O)O-R⁵, -CF₃, -O-R⁵, -C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen und die Reste R¹, R³, R³ und R⁴ gleich oder unterschiedlich sind, und L gleich einem über ein Sauerstoff oder Kohlenstoffatom an das Phosphoratom gebundener organischer Rest oder ein Halogenid ist, aufweisen,
durch Kondensation von Phosphorverbindungen der Formel **i**
PHalₐR₍₃₋ₐ₎ (i)
wobei Hal gleich Halogenid, ausgewählt aus Chlor, Brom und Iod, wobei die Halogenide gleich oder unterschiedlich sein können, R gleich über ein Kohlenstoff- oder Sauerstoff-Atom an das Phosphor gebundener organischer Rest und a = 2 oder 3 bedeuten,
mit einer organischen Verbindung der Formel **T'** 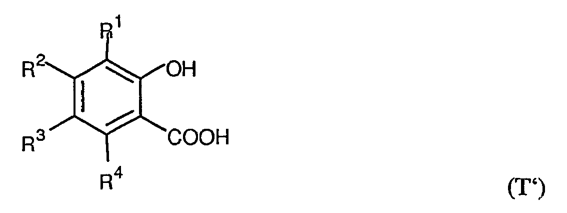 wobei die Reste R¹ bis R⁴ die für die Struktureinheit T genannte Bedeutung haben.

3. Verfahren nach Anspruch 1 oder 2,
**dadurch gekennzeichnet,**
**dass** als dreiwertige Organophosphor-Verbindung zumindest eine Verbindung, ausgewählt aus den Verbindungen der nachfolgenden Formeln 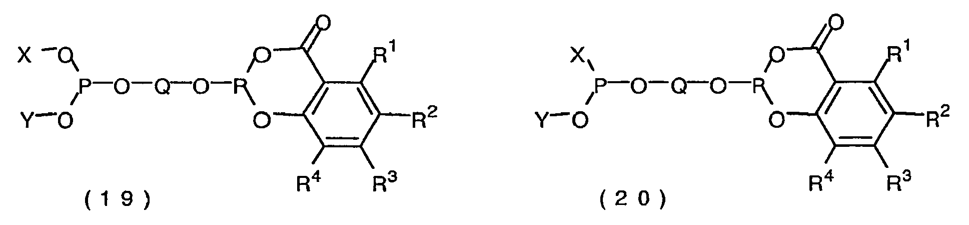 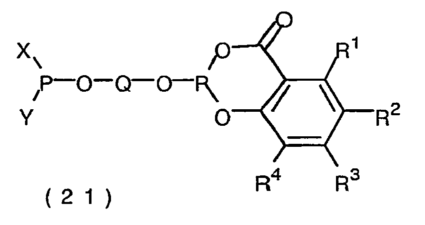 wobei X und Y gleich substituierte oder unsubstituierte, aliphatische, alicyclische, aliphatisch alicyclische, heterocyclische, aliphatisch-heterocyclische, aromatisch-aromatische oder aliphatisch-aromatische Kohlenwasserstoffreste mit 1 bis 50 Kohlenstoffatomen, wobei X und Y gleich oder unterschiedlich oder kovalent miteinander verknüpft sind, und mit Q gleich ein zumindest zweiwertiger, substituierter oder unsubstituierter aliphatischer, alicyclischer, aliphatisch-alicyclischer, heterocyclischer, aliphatisch-heterocyclischer, aromatischer, aromatisch-aromatischer oder aliphatisch-aromatischer Kohlenwasserstoffrest, wobei die substituierten Kohlenwasserstoffreste als Substituenten solche, ausgewählt aus -N(R⁵)₂, -NHR⁵, -NH₂, Fluor, Chlor, Brom, Jod, -OH, -CN, -C(O)-R⁵, -C(O)H oder -C(O)O-R⁵, -CF₃, -O-R⁵, -C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen und wobei R¹ bis R⁴ die für die Struktureinheit **T** genannte Bedeutung aufweisen, hergestellt wird

4. Verfahren nach zumindest einem der Ansprüche 1 bis 3,
**dadurch gekennzeichnet,**
**dass** als dreiwertige Organophosphor-Verbindungen Phosphite der Formel 10 oder 11 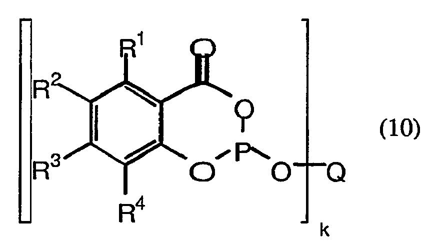 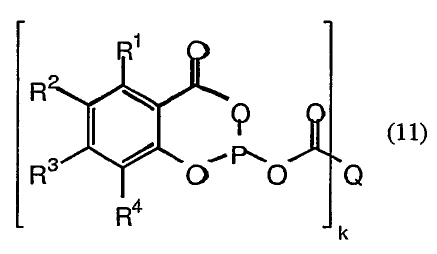 wobei R¹, R², R³, und R⁴ die für die Struktureinheit **T** genannte Bedeutung haben, Q ein k-bindiger substituierter oder unsubstituierter aliphatischer, alicyclischer, gemischt aliphatisch-alicyclischer, heterocyclischer, gemischt aliphatisch-heterocyclischer, aromatischer, heteroaromatischer, gemischt aliphatisch-aromatischer Kohlenwasserstoffrest mit 1 bis 50 Kohlenstoffatomen ist, wobei aliphatische Anteile von Q Sauerstoff, Schwefel- und/oder Stickstoff enthalten können, und wobei die substituierten Kohlenwasserstoffreste als Substituenten solche, ausgewählt aus -N(R⁵)₂, -NHR⁵, -NH₂, Fluor, Chlor, Brom, Jod, -OH, - CN, -C(O)-R⁵, -C(O)H oder -C(O)O-R⁵, -CF₃, -O-R⁵, -C(O)N-R⁵, -OC(O)-R⁵ und/oder - Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen, k mindestens 2 ist und die Bedeutung von R¹, R², R³ und R⁴ in den einzelnen an Q gebundenen Strukturelementen T jeweils gleich oder unterschiedlich ist

5. Verfahren nach zumindest einem der Ansprüche 1 bis 4,
**dadurch gekennzeichnet,**
**dass** als Phosphorverbindung der Formel i zumindest eine Verbindung ausgewählt aus den Verbindungen der nachfolgenden Formeln 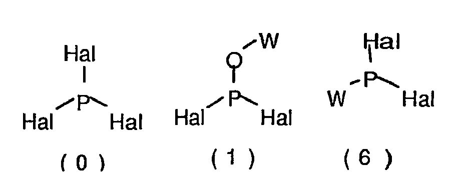 mit W gleich organischer Rest
eingesetzt wird.

6. Verfahren nach Anspruch 5,
**dadurch gekennzeichnet,**
**dass** als Phosphorverbindung der Formel **i** eine Verbindung der Formel **1** eingesetzt wird, die durch Umsetzung einer Verbindung **0** mit einer zumindest eine Hydroxy-Gruppe aufweisenden organischen Verbindung **W** in Gegenwart eines basischen Ionenaustauschers hergestellt wird.

7. Verfahren nach Anspruch 6,
**dadurch gekennzeichnet,**
**dass** als zumindest eine Hydroxy-Gruppe aufweisende Verbindung **W** zumindest eine substituierte oder unsubstituierte Verbindung, ausgewählt aus Methanol, Ethanol, n-Propanol, i-Propanol, 1-Butanol, 2-Butanol, t-Butanol, 2-Ethylhexanol, i-Nonanol, i-Decanol, i-Tridecanol, Phenol, Phenol-Derivate, 1,4-Dihydroxybenzol, 1,2-Dihydroxybenzol, 1,8-Dihydroxynaphtalin, 1,1'-Binaphtyl-2,2'-diol, 2,2'-Binaphtyl-1,1'-diol oder einer Verbindung, die eine oder mehrere Hydroxygruppen und eine oder mehrere der Struktureinheiten T aufweist, eingesetzt wird, wobei die substituierten Verbindungen Substituenten, ausgewählt aus primären, sekundären oder tertiären Alkylgruppen, alicyclischen Gruppen, aromatischen Gruppen, -N(R⁵)₂, -NHR⁵, -NH₂, Fluor, Chlor, Brom, Jod, -OH, -CN, -C(O)-R⁵, -C(O)H oder -C(O)O-R⁵, -CF₃, -O-R⁵, - C(O)N-R⁵, -OC(O)-R⁵ und/oder -Si(R⁵)₃, mit R⁵ gleich einem monovalenten, bevorzugt 1 bis 20 Kohlenstoffatome aufweisenden Kohlenwasserstoffrest, wobei wenn mehrere Kohlenwasserstoffreste R⁵ vorhanden sind, diese gleich oder unterschiedlich sein können, aufweisen.

8. Verfahren nach zumindest einem der Ansprüche 5 bis 7,
**dadurch gekennzeichnet,**
**dass** zur Herstellung von Verbindungen der Formel **1** jeweils die Phosphorverbindung zusammen mit einem oder mehreren basischen Ionenaustauscherharzen vorgelegt wird und anschließend die zumindest eine OH-Gruppe aufweisende Verbindung zudosiert wird.

9. Verfahren nach zumindest einem der Ansprüche 3 oder 4,
**dadurch gekennzeichnet,**
**dass** zur Herstellung von asymmetrischen Diphosphorverbindungen der Formeln **19, 20, 21, 10** und **11** die OH-Gruppen aufweisende Verbindung zusammen mit einem oder mehreren basischen Ionenaustauscherharzen vorgelegt wird und anschließend eine oder mehrere Phosphorverbindungen zudosiert werden.

10. Verfahren nach einem der Ansprüche 1 bis 9,
**dadurch gekennzeichnet,**
**dass** die Umsetzung jeweils einer zumindest eine Phosphor-Halogen-Bindung aufweisenden Verbindung mit einer zumindest eine Hydroxy-Gruppe aufweisende Verbindung ein Reaktionsschritt ist

11. Verfahren nach Anspruch 10,
**dadurch gekennzeichnet,**
**dass** bei der Durchführung mehrerer Reaktionsschritte diese kontinuierlich oder diskontinuierlich durchgeführt werden.

12. Verfahren nach Anspruch 10 oder 11,
**dadurch gekennzeichnet,**
**dass** bei der Durchführung mehrerer Reaktionsschritte in den Reaktionsschritten gleiche oder unterschiedliche Ionenaustauscher eingesetzt werden.

13. Verfahren nach einem der Ansprüche 10 bis 12,
**dadurch gekennzeichnet,**
**dass** bei der Durchführung mehrerer Reaktionsschritte in den Reaktionsschritten gleiche oder unterschiedliche Temperaturen eingestellt werden.

14. Verfahren nach zumindest einem der Anspruch 1 bis 13,
**dadurch gekennzeichnet,**
**dass** das Verfahren in Gegenwart eines oder mehrerer Lösemittel durchgeführt wird, wobei die Lösemittel ausgewählt sind aus der Gruppe die Benzol, Toluol, Xylole, Pentan, n-Hexan, n-Heptan, Cyclohexan, Methylcyclohexan, Diethylether, Di-iso-Propylether, Methyl-tert Butylether, Anisol, Tetrahydrofuran, 1,4-Dioxan, 1,3-Dioxolan, Ethylacetat, Isobutylacetat, tert-Butylacetat, Ethylencarbonat, Propylencarbonat, 1,2-Butylencarbonat, Aceton, 2-Butanon, 3,3-Dimethyl-2-butanon, Benzonitril, Proprionitril, Acetonitril, Lactone, N-Methylpyrrolidon, Dimethylformamid, Dimethylsulfoxid, N Alkyl-Morpholine, Amine und Sulfolan umfasst.

15. Verfahren nach zumindest einem der Anspruch 1 bis 14,
**dadurch gekennzeichnet,**
**dass** das Verfahren in Gegenwart von polymeren, schwach basischen Ionenaustauscherharzen auf Basis von Styrol-Divinylbenzol-Copolymeren, die N,N-Diakyl-Amin-Gruppen tragen, durchgeführt wird.

16. Verfahren nach einem der Ansprüche 1 bis 15,
**dadurch gekennzeichnet,**
**dass** der Ionenaustauscher in Form von Partikeln mit einer mittleren Partikelgröße von 10 µm bis 2 mm oder in Form einer festen Packung eingesetzt wird.

17. Verfahren nach einem der Ansprüche 1 bis 16,
**dadurch gekennzeichnet,**
**dass** der Ionenaustauscher vor dem Einsatz im erfindungsgemäßen Verfahren getrocknet wird.

18. Verfahren nach einem der Ansprüche 1 bis 17,
**dadurch gekennzeichnet,**
**dass** das Verfahren in Gegenwart eines Protonenüberträgers durchgeführt wird.

## Claims

1. Process for preparing trivalent organophosphorus compounds which has at least one structural unit **S** 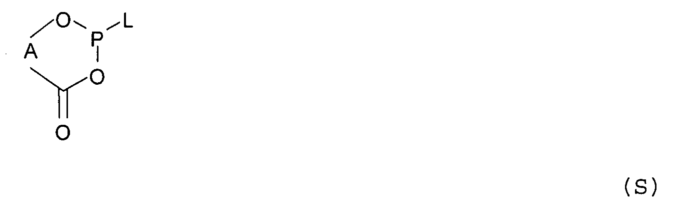 where A a divalent substituted or unsubstituted alkyl or aryl radical which may form a ring system as per structural unit S, the L radical is an organic radical bonded to the phosphorus atom via an oxygen or carbon atom, or is a halide,
by condensing phosphorus compounds of the formula **i**
PHalₐR₍₃₋ₐ₎ (i)
where Hal is halide selected from chlorine, bromine and iodine, and the halides may be the same or different, R is an organic radical bonded to the phosphorus via a carbon or oxygen atom, and a = 2 or 3,
with an organic compound of the formula S' 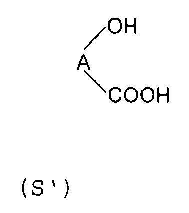 where A is as defined for the structural unit **S**,
**characterized in that**
the reaction is carried out in the presence of at least one basic ion exchange resin.

2. Process according to Claim 1,
**characterized in that**
trivalent organophosphorus compounds which have at least one structural unit **T** 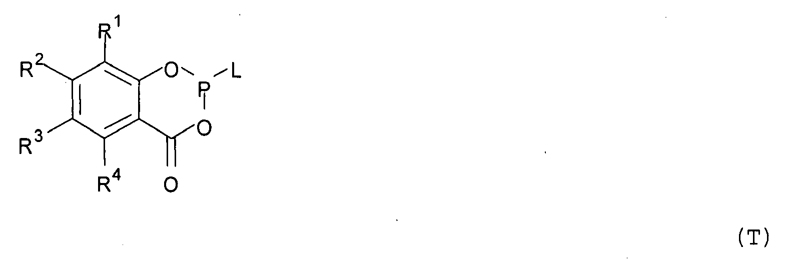 where R¹, R², R³, and R⁴ are each independently selected from monovalent substituted and unsubstituted aliphatic, alicyclic, aromatic, heteroaromatic, mixed aliphatic-alicyclic, mixed aliphatic-aromatic, heterocyclic, mixed aliphatic-heterocyclic, hydrocarbon radicals having from 1 to 50 carbon atoms, H, F, Cl, Br, I, -CF₃, -CH₂(CF₂)ⱼCF₃ with j = 0 - 9, -OR⁹, -COR⁹, -CO₂R⁹, -CO₂M, -SR⁹, -SO₂R⁹, -SOR⁹, -SO₃R⁹, -SO₃M, -SO₂NR⁹R¹⁰, -NR⁹R¹⁰, -N=CR⁹R¹⁰, where R⁹ and R¹⁰ are each independently selected from H, monovalent substituted and unsubstituted aliphatic and aromatic hydrocarbon radicals having from 1 to 25 carbon atoms, and M is an alkali metal ion, formally half an alkaline earth metal ion, ammonium ion or phosphonium ion, or adjacent R¹ to R⁴ radicals together form a fused substituted or unsubstituted aromatic, heteroaromatic, aliphatic, mixed aromatic-aliphatic or mixed heteroaromatic-aliphatic ring system; and the substituted hydrocarbon radicals may have as substituents those selected from -N(R⁵)₂, -NHR⁵, -NH₂, fluorine, chlorine, bromine, iodine, -OH, -CN, -C(O)-R⁵, - C(O)H or -C(O)O-R⁵, -CF₃, -O-R⁵, -C(O)N-R⁵, -OC(O)-R⁵ and/or -Si(R⁵) ₃, where R⁵ is a monovalent hydrocarbon radical preferably having from 1 to 20 carbon atoms, and, when a plurality of hydrocarbon radicals R⁵ is present, they may be the same or different, and R¹, R², R³ and R⁴ radicals may be the same or different, and L is an organic radical bonded to the phosphorus atom via an oxygen or carbon atom, or is a halide,
by condensing phosphorus compounds of the formula **i**
PHalₐR₍₃₋ₐ₎ (i)
where Hal is halide selected from chlorine, bromine and iodine, and the halides may be the same or different, R is an organic radical bonded to the phosphorus via a carbon or oxygen atom and a = 2 or 3,
with an organic compound of the formula **T'** 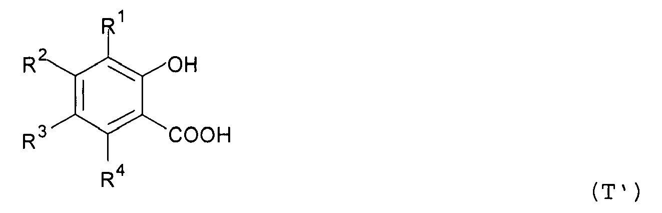 where the R¹ to R⁴ radicals are each as defined for the structural unit **T**, are prepared.

3. Process according to Claim 1 or 2,
**characterized in that**
the trivalent organophosphorus compound prepared is at least one compound selected from the compounds of the following formulae 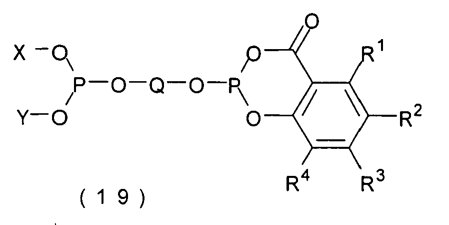 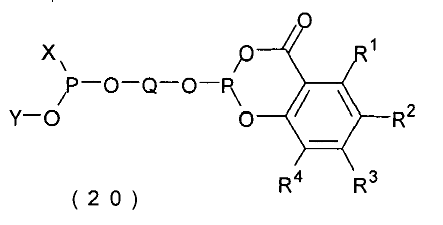 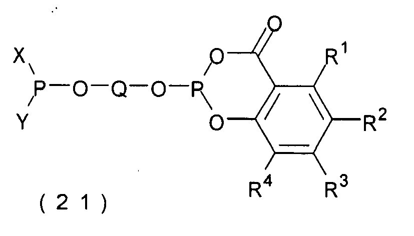 where X and Y are substituted or unsubstituted, aliphatic, alicyclic, aliphatic-alicyclic, heterocyclic, aliphatic-heterocyclic, aromatic-aromatic or aliphatic-aromatic hydrocarbon radicals having from 1 to 50 carbon atoms, and X and Y are the same or different or covalently joined together, and where Q is an at least divalent, substituted or unsubstituted aliphatic, alicyclic, aliphatic-alicyclic, heterocyclic, aliphatic-heterocyclic, aromatic, aromatic-aromatic or aliphatic-aromatic hydrocarbon radical, and the substituted hydrocarbon radicals may have as substituents those selected from - N(R⁵)₂, -NHR⁵, -NH₂, fluorine, chlorine, bromine, iodine, -OH, -CN, -C(O)-R⁵, -C(O)H or -C(O)O-R⁵, - CF₃, -O-R⁵, -C(O)N-R⁵, -OC(O)-R⁵ and/or -Si(R⁵)₃, where R⁵ is a monovalent hydrocarbon radical preferably having from 1 to 20 carbon atoms, and, when a plurality of hydrocarbon radicals R⁵ is present, they may be the same or different, and where R¹ to R⁴ are each as defined for the structural unit **T**.

4. Process according to at least one of Claims 1 to 3,
**characterized in that**
the trivalent organophosphorus compounds prepared are phosphites of the formula **10** or **11** 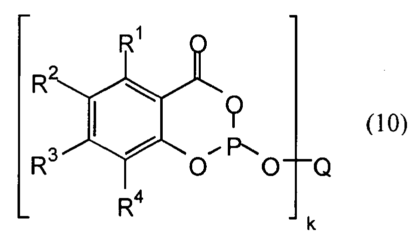 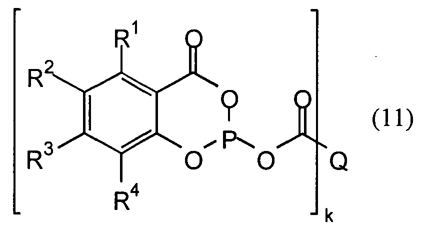 where R¹, R², R³, and R⁴ are each as defined for the structural unit **T**, Q is a k-valent substituted or unsubstituted aliphatic, alicyclic, mixed aliphatic-alicyclic, heterocyclic, mixed aliphatic-heterocyclic, aromatic, heteroaromatic, mixed aliphatic-aromatic, hydrocarbon radical having from 1 to 50 carbon atoms, and aliphatic moieties of Q may contain oxygen, sulfur and/or nitrogen, and where the substituted hydrocarbon radicals may have as substituents those selected from -N(R⁵)₂, -NHR⁵, -NH₂, fluorine, chlorine, bromine, iodine, -OH, -CN, -C(O)-R⁵, -C(O)H or - C(O)O-R⁵, -CF₃, -O-R⁵, -C(O)N-R⁵, -OC(O)-R⁵ and/or - Si(R⁵)₃, where R⁵ is a monovalent hydrocarbon radical preferably having from 1 to 20 carbon atoms, and, when a plurality of hydrocarbon radicals are R⁵ is present, they may be the same or different, k is at least 2, and R¹, R², R³ and R⁴ in the individual structural elements T bonded to Q may each have the same or different definitions.

5. Process according to at least one of Claims 1 to 4,
**characterized in that**
the phosphorus compound of the formula **i** used is at least one compound selected from the compounds of the following formulae 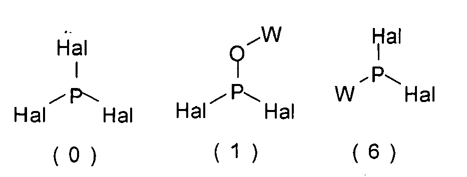 where **W** is an organic radical.

6. Process according to Claim 5,
**characterized in that**
the phosphorus compound of the formula **i** used is a compound of the formula **1** which is prepared by reacting a compound **0** with an organic compound having at least one hydroxyl group **W** in the presence of a basic ion exchanger.

7. Process according to Claim 6,
**characterized in that**
the compound having at least one hydroxyl group **W** is at least one substituted or unsubstituted compound selected from methanol, ethanol, n-propanol, isopropanol, 1-butanol, 2-butanol, t-butanol, 2-ethylhexanol, isononanol, isodecanol, isotridecanol, phenol, phenol derivatives, 1,4-dihydroxybenzene, 1,2-dihydroxybenzene, 1,8-dihydroxynaphthalene, 1,1'-binaphthyl-2,2'-diol, 2,2'-binaphthyl-1,1'-diol, or a compound which has one or more hydroxyl groups and one or more of the structural units T, and the substituted compounds have substituents selected from primary, secondary and tertiary alkyl groups, alicyclic groups, aromatic groups, -N(R⁵)₂, -NHR⁵, -NH₂, fluorine, chlorine, bromine, iodine, -OH, - CN, -C(O)-R⁵, -C(O)H or -C(O)O-R⁵, -CF₃, -O-R⁵, -C(O)N-R⁵, -OC(O)-R⁵ and/or -Si(R⁵)₃, where R⁵ is a monovalent hydrocarbon radical preferably having from 1 to 20 carbon atoms, and, when a plurality of hydrocarbon radicals R⁵ is present, they may be the same or different.

8. Process according to at least one of Claims 5 to 7,
**characterized in that**
compounds of the formula **1** are prepared by in each case initially charging the phosphorus compound together with one or more basic ion exchange resins and subsequently metering in the compound having at least one OH group.

9. Process according to at least one of Claims 3 and 4,
**characterized in that**
asymmetric diphosphorus compounds of the formulae **19, 20, 21, 10** and **11** are prepared by initially charging the compound having OH groups together with one or more basic ion exchange resins and subsequently metering in one or more phosphorus compounds.

10. Process according to one of Claims 1 to 9,
**characterized in that**
the reaction of a compound having at least one phosphorus-halogen bond with a compound having at least one hydroxyl group is one reaction step.

11. Process according to Claim 10,
**characterized in that**,
when carrying out a plurality of reaction steps, they may be carried out continuously or batchwise.

12. Process according to Claim 10 or 11,
**characterized in that**,
when carrying out a plurality of reaction steps, identical or different ion exchangers may be used in the reaction steps.

13. Process according to one of Claims 10 to 12,
**characterized in that**,
when carrying out the plurality of reaction steps, identical or different temperatures may be set in the reaction steps.

14. Process according to at least one of Claims 1 to 13,
**characterized in that**
is carried out in the presence of one or more solvents which are selected from the group consisting of benzene, toluene, xylene, pentane, n-hexane, n-heptane, cyclohexane, methylcyclohexane, diethyl ether, diisopropyl ether, methyl tert-butyl ether, anisole, tetrahydrofuran, 1,4-dioxane, 1,3-dioxolane, ethyl acetate, isobutyl acetate, tert-butyl acetate, ethylene carbonate, propylene carbonate, 1,2-butylene carbonate, acetone, 2-butanone, 3,3-dimethyl-2-butanone, benzonitrile, propionitrile, acetonitrile, lactones, N-methylpyrrolidone, dimethylformamide, dimethyl sulfoxide, N-alkylmorpholines, amines and sulfolane.

15. Process according to at least one of Claims 1 to 14,
**characterized in that**
it is carried out in the presence of polymeric, weakly basic ion exchange resins based on styrenedivinylbenzene copolymers which bear N,N-diakylamine groups.

16. Process according to one of Claims 1 to 15,
**characterized in that**
the ion exchanger is used in the form of particles having an average particle size of from 10 µm to 2 mm or in the form of a fixed package.

17. Process according to one of Claims 1 to 16,
**characterized in that**
the ion exchanger is dried before use in the process according to the invention.

18. Process according to one of Claims 1 to 17,
**characterized in that**
it is carried out in the presence of a proton transferrer.

## Revendications

1. Procédé de préparation de composés organophosphorés trivalents, qui présentent au moins une unité de structure S 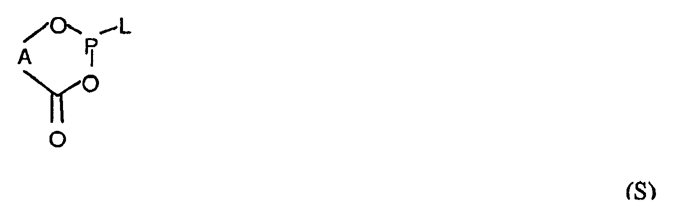 A représentant un radical alkyle ou aryle divalent, substitué ou non substitué, qui peut former un système cyclique selon l'unité de structure S, le radical L étant un radical organique lié via un atome d'oxygène ou de carbone à l'atome de phosphore ou un halogénure, par condensation de composés phosphorés de formule i
PHalₐR₍₃₋ₐ₎ (i)
où Hal signifie un halogénure, choisi parmi le chlore, le brome et l'iode, les halogénures pouvant être identiques ou différents, R signifie un radical organique lié au phosphore via un atome de carbone ou d'oxygène et a = 2 ou 3, avec un composé organique de formule S' 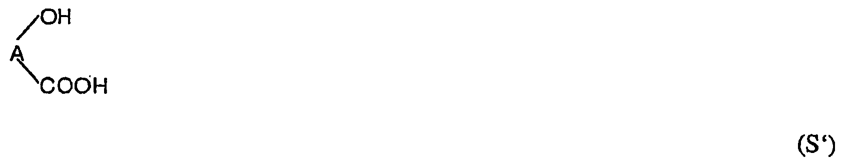 A ayant la signification mentionnée pour l'unité de structure S, **caractérisé**
**en ce que** la transformation est réalisée en présence d'au moins une résine échangeuse d'ions basique.

2. Procédé selon la revendication 1, **caractérisé en ce que**, des composés organophosphorés trivalents sont préparés, qui présentent au moins une unité de structure T 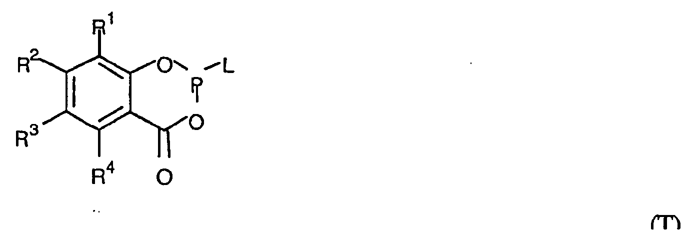 où R¹, R², R³, et R⁴ sont choisis à chaque fois indépendamment les uns des autres parmi les radicaux hydrocarbonés monovalents, substitués ou non substitués, aliphatiques, alicycliques, aromatiques, hétéroaromatiques, aliphatiques-alicycliques mixtes, aliphatiques-aromatiques mixtes, hétérocycliques, aliphatiques-hétérocycliques mixtes comprenant 1 à 50 atomes de carbone, H, F, Cl, Br, I, -CF₃, -CH₂(CF₂)ⱼCF₃ avec j = 0-9, -OR⁹, -COR⁹, -CO₂R⁹, -CO₂M, -SR⁹, -SO₂R⁹, -SOR⁹, -SO₃R⁹, -SO₃M, -SO₂NR⁹R¹⁰, -NR⁹R¹⁰, -N=CR⁹R¹⁰, où R⁹ et R¹⁰ sont choisis, indépendamment l'un de l'autre, parmi H, les radicaux hydrocarbonés monovalents, substitués ou non substitués, aliphatiques et aromatiques comprenant 1 à 25 atomes de carbone, et M représente un ion de métal alcalin, formellement un demi-ion de métal alcalino-terreux, d'ammonium ou de phosphonium, ou les radicaux adjacents R¹ à R⁴ forment, ensemble, un système cyclique condensé, substitué ou non substitué, aromatique, hétéroaromatique, aliphatique, aromatique-aliphatique mixte ou hétéroaromatique-aliphatique mixte ; les radicaux hydrocarbonés substitués présentant, comme substituants, ceux choisis parmi -N(R⁵)₂, -NHR⁵, -NH₂, fluor, chlore, brome, iode, -OH, -CN, -C(O)-R⁵, -C(O)H ou -C(O)O-R⁵, -CF₃, -O-R⁵, -C(O)N-R⁵, -OC(O)-R⁵ et/ou -Si(R⁵)³, avec R⁵ représentant un radical hydrocarboné monovalent, présentant de préférence 1 à 20 atomes de carbone, où, lorsqu'il existe plusieurs radicaux hydrocarbonés R⁵, ceux-ci peuvent être identiques ou différents et les radicaux R¹, R², R³ et R⁴ sont identiques ou différents et L représente un radical organique lié via un atome d'oxygène ou de carbone à l'atome de phosphore ou un halogénure, par condensation de composés phosphorés de formule i
PHalₐR₍₃₋ₐ₎ (i)
où Hal signifie un halogénure, choisi parmi le chlore, le brome et l'iode, les halogénures pouvant être identiques ou différents, R signifie un radical organique lié au phosphore via un atome de carbone ou d'oxygène et a = 2 ou 3, avec un composé organique de formule T' 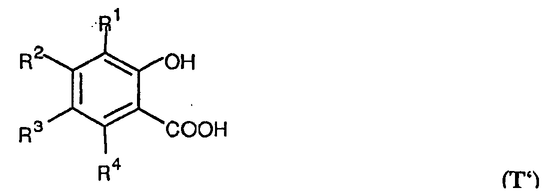 dans laquelle les radicaux R¹ à R⁴ ont la signification mentionnée pour l'unité de structure T.

3. Procédé selon la revendication 1 ou 2, **caractérisé**
**en ce qu'**on prépare comme composé organophosphoré trivalent au moins un composé choisi parmi les composés des formules suivantes 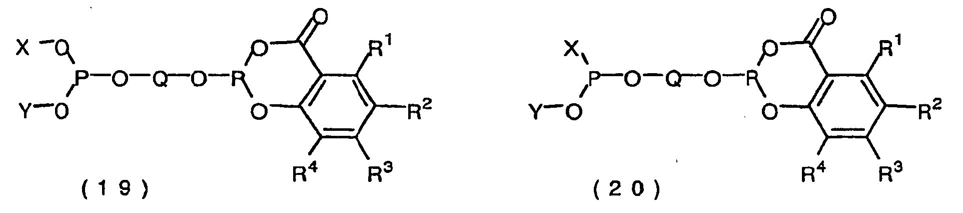 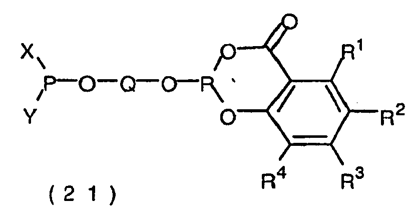 où X et Y représentent des radicaux hydrocarbonés substitués ou non substitués, aliphatiques, alicycliques, aliphatiques-alicycliques, hétérocycliques, aliphatiques-hétérocycliques, aromatiques-aromatiques ou aliphatiques-aromatiques, comprenant 1 à 50 atomes de carbone, X et Y étant identiques ou différents ou liés par covalence l'un avec l'autre, et Q représente un radical hydrocarboné au moins divalent, substitué ou non substitué, aliphatique, alicyclique, aliphatique-alicyclique, hétérocyclique, aliphatique-hétérocyclique, aromatique, aromatique-aromatique ou aliphatique-aromatique, les radicaux hydrocarbonés substitués présentant, comme substituants, ceux choisis parmi -N(R⁵)₂, -NHR⁵, -NH₂, fluor, chlore, brome, iode, -OH, -CN, -C(O)-R⁵, -C(O)H ou -C(O)O-R⁵, -CF₃, -O-R⁵, -C(O)N-R⁵, -OC(O)-R⁵ et/ou -Si(R⁵)₃, avec R⁵ représentant un radical hydrocarboné monovalent, présentant de préférence 1 à 20 atomes de carbone, où, lorsqu'il existe plusieurs radicaux hydrocarbonés R⁵, ceux-ci peuvent être identiques ou différents et R¹ à R⁴ présentent la signification mentionnée pour l'unité de structure T.

4. Procédé selon au moins l'une quelconque des revendications 1 à 3, **caractérisé**
**en ce qu'**on prépare comme composés organophosphorés trivalents des phosphites de formule 10 ou 11 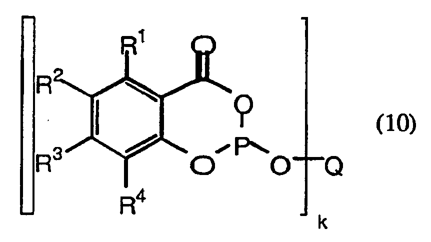 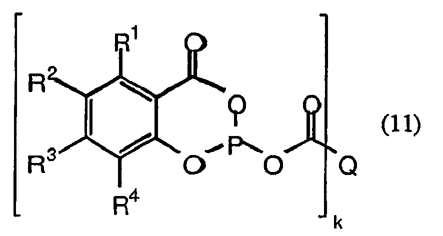 où R¹, R², R³, et R⁴ ont la signification mentionnée pour l'unité de structure T, Q représente un radical hydrocarboné k-valent, substitué ou non substitué, aliphatique, alicyclique, aliphatique-alicyclique mixte, hétérocyclique, aliphatique-hétérocyclique mixte, aromatique, hétéroaromatique, aliphatique-aromatique mixte, comprenant 1 à 50 atomes de carbone, les parties aliphatiques de Q pouvant contenir de l'oxygène, du soufre et/ou de l'azote et les radicaux hydrocarbonés substitués présentant comme substituants ceux choisis parmi -N(R⁵)₂, -NHR⁵, -NH₂, fluor, chlore, brome, iode, -OH, -CN, -C(O)-R⁵, -C(O)H ou -C(O)O-R⁵, -CF₃, -O-R⁵, -C(O)N-R⁵, -OC(O)-R⁵ et/ou -Si(R⁵)₃, avec R⁵ représentant un radical hydrocarboné monovalent, comprenant de préférence 1 à 20 atomes de carbone, où, lorsque plusieurs radicaux hydrocarbonés R⁵ sont présents, ceux-ci peuvent être identiques ou différents, k valant au moins 2 et la signification de R¹, R², R³ et R⁴ dans les différents éléments de structure T liés à Q pouvant à chaque fois être identique ou différente.

5. Procédé selon au moins l'une quelconque des revendications 1 à 4, **caractérisé**
**en ce qu'**on utilise comme composé phosphoré de formule i au moins un composé choisi parmi les composés des formules suivantes 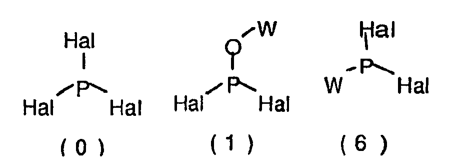 avec W représentant un radical organique.

6. Procédé selon la revendication 5, **caractérisé**
**en ce qu'**on utilise comme composé phosphore de formule i un composé de formule 1 qui est préparé par transformation d'un composé 0 avec un composé organique W présentant au moins un groupe hydroxy en présence d'un échangeur d'ions basique.

7. Procédé selon la revendication 6, **caractérisé**
**en ce qu'**on utilise comme composé W présentant au moins un groupe hydroxy au moins un composé substitué ou non substitué choisi parmi le méthanol, l'éthanol, le n-propanol, l'i-propanol, le 1-butanol, le 2-butanol, le t-butanol, le 2-éthylhexanol, l'i-nonanol, l'i-décanol, l'i-tridécanol, le phénol, les dérivés du phénol, le 1,4-dihydroxybenzène, le 1,2-dihydroxybenzène, le 1,8-dihydroxynaphtalène, le 1,1'-binaphtyl-2,2'-diol, le 2,2'-binaphtyl-1,1'-diol ou un composé qui présente un ou plusieurs groupes hydroxy et une ou plusieurs unités de structure T, les composés substitués présentant des substituants choisis parmi les groupes alkyle primaires, secondaires ou tertiaires, les groupes alicycliques, les groupes aromatiques, -N(R⁵)₂, -NHR⁵, -NH₂, fluor, chlore, brome, iode, -OH, -CN, -C(O)-R⁵, -C(O)H ou -C(O)O-R⁵, -CF₃, -O-R⁵, -C(O)N-R⁵, -OC(O)-R⁵ et/ou -Si(R⁵)₃, avec R⁵ représentant un radical hydrocarboné monovalent, comprenant de préférence 1 à 20 atomes de carbone, où, lorsque plusieurs radicaux hydrocarbonés R⁵ sont présents, ceux-ci peuvent être identiques ou différents.

8. Procédé selon au moins l'une quelconque des revendications 5 à 7, **caractérisé**
**en ce qu'**on dispose au préalable, pour la préparation de composés de formule 1, à chaque fois le composé phosphoré avec une ou plusieurs résines échangeuses d'ions basiques et on ajoute ensuite en dosant le composé présentant au moins un groupe OH.

9. Procédé selon au moins l'une quelconque des revendications 3 ou 4, **caractérisé**
**en ce qu'**on dispose au préalable, pour la préparation de composés diphosphorés asymétriques de formule 19, 20, 21, 10 et 11 le composé présentant les groupes OH avec une ou plusieurs résines échangeuses d'ions basiques et on ajoute ensuite en dosant un ou plusieurs composés phosphorés.

10. Procédé selon l'une quelconque des revendications 1 à 9, **caractérisé**
**en ce que** la transformation à chaque fois d'un composé présentant au moins une liaison phosphore-halogène avec un composé présentant au moins un groupe hydroxy est une étape de réaction.

11. Procédé selon la revendication 10, **caractérisé**
**en ce que** lors de la réalisation de plusieurs étapes de réaction, celles-ci peuvent être réalisées de manière continue ou discontinue.

12. Procédé selon la revendication 10 ou 11, **caractérisé**
**en ce que** lors de la réalisation de plusieurs étapes de réaction, on utilise dans les étapes de réaction des échangeurs d'ions identiques ou différents.

13. Procédé selon l'une quelconque des revendications 10 à 12, **caractérisé**
**en ce que** lors de la réalisation de plusieurs étapes de réaction, on règle dans les étapes de réaction des températures identiques ou différentes.

14. Procédé selon au moins l'une quelconque des revendications 1 à 13, **caractérisé**
**en ce que** le procédé est réalisé en présence d'un ou de plusieurs solvants, les solvants étant choisis dans le groupe comprenant le benzène, le toluène, les xylènes, le pentane, le n-hexane, le n-heptane, le cyclohexane, le méthylcyclohexane, le diéthyléther, le diisopropyléther, le méthyl-tert-butyléther, l'anisole, le tétrahydrofuranne, le 1,4-dioxane, le 1,3-dioxolane, l'acétate d'éthyle, l'acétate d'isobutyle, l'acétate de tert-butyle, le carbonate d'éthylène, le carbonate de propylène, le carbonate de 1,2-butylène, l'acétone, la 2-butanone, la 3,3-diméthyl-2-butanone, le benzonitrile, le propionitrile, l'acétonitrile, les lactones, la N-méthylpyrrolidone, le diméthylformamide, le diméthylsulfoxyde, les N-alkyl-morpholines, les amines et le sulfolane.

15. Procédé selon au moins l'une quelconque des revendications 1 à 14, **caractérisé**
**en ce que** le procédé est réalisé en présence de résines échangeuses d'ions polymères, faiblement basiques à base de copolymères de styrène-divinylbenzène, qui portent des groupes N,N-dialkylamine.

16. Procédé selon l'une quelconque des revendications 1 à 15, **caractérisé**
**en ce que** l'échangeur d'ions est utilisé sous forme de particules avec une grosseur moyenne des particules de 10 µm à 2 mm ou sous forme d'un garnissage solide.

17. Procédé selon l'une quelconque des revendications 1 à 16, **caractérisé**
**en ce que** l'échangeur d'ions est séché avant l'utilisation dans le procédé selon l'invention.

18. Procédé selon l'une quelconque des revendications 1 à 17, **caractérisé**
**en ce que** le procédé est réalisé en présence d'un agent de transfert de protons.
